(19) Europäisches Patentamt
European Patent Office
Office européen des brevets

(11) EP 4 367 162 B1

(12) **EUROPEAN PATENT SPECIFICATION**

(45) Date of publication and mention of the grant of the patent:
**20.08.2025 Bulletin 2025/34**

(21) Application number: **22748284.1**

(22) Date of filing: **07.07.2022**

(51) International Patent Classification (IPC):
***C08G 63/84*** *(2006.01)* ***C08G 63/08*** *(2006.01)*
***C08G 63/685*** *(2006.01)* ***C08G 63/688*** *(2006.01)*

(52) Cooperative Patent Classification (CPC):
**C08G 63/08; C08G 63/6852; C08G 63/6882; C08G 63/84**

(86) International application number:
**PCT/EP2022/068966**

(87) International publication number:
**WO 2023/281004 (12.01.2023 Gazette 2023/02)**

(54) **MONOMER AND POLYMERS**

MONOMER UND POLYMERE

MONOMÈRE ET POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2021 GB 202109787**

(43) Date of publication of application:
**15.05.2024 Bulletin 2024/20**

(73) Proprietor: **University of Manchester**
**Manchester M13 9PL (GB)**

(72) Inventors:
- **SHAVER, Michael**
  **Manchester Greater Manchester M13 9PL (GB)**
- **SUCU, Theona**
  **Manchester Greater Manchester M13 9PL (GB)**

(74) Representative: **Gilani, Anwar et al**
**Venner Shipley LLP**
**406 Science Park**
**Milton Road**
**Cambridge CB4 0WW (GB)**

(56) References cited:
**US-B2- 6 984 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 367 162 B1

## Description

*Field of the Invention*

The present invention relates to the use of a monomer as a cross-linker for biodegradable thermosetting polyester resins, a cross-linked polymer and a method of preparation thereof.

*Background*

Thermosetting plastics, or thermosets, are polymers which are initially malleable but become irreversibly hardened upon curing and therefore cannot be re-moulded into a different shape. This irreversibility is due to the formation of chemical bonds or cross-links between individual chains of the polymer, known as curing. This contrasts with thermoplastics, which become malleable at certain elevated temperatures and may be reshaped. Thermosets generally have higher dimensional stability, thermal, mechanical and environmental resistance than thermoplastics as a result of their extremely stable covalent cross-links. In general, a higher density of cross-links leads to a greater resistance to thermal and chemical degradation of the thermoset polymer.

However, the inherently high dimensional stability of thermosets as a result of cross-links also usually prevents efficient degradation or reprocessing of the material. Cross-linked polymers are down-cycled into lower value products, incinerated or landfilled because mass recycling is impractical due to their structures. The lack of traditional waste management, coupled with the higher value potential applications, suggest that degradable materials could more readily offer a sustainable pathway at end-of-life.

It is well known in the art that cross-linking agents may be employed during the preparation of aliphatic polyesters and polycarbonates, which already provide good mechanical and thermal properties and have the advantage of degrading via hydrolysis or via enzymatic processes at end-of-life. Current aliphatic polyester systems as biodegradable thermosets are limited by their poor mechanical and solvent resistive properties but may be improved upon by introducing cross-linking.

US 6 984 393 B2 discloses biodegradable and biocompatible elastomers. Many scientific papers discuss the use of cross-linkers. These include: J. P. Brutman, G. X. De Hoe, D. K. Schneiderman, T. N. Le and M. A. Hillmyer, Ind. Eng. Chem. Res., 2016, Renewable, Degradable, and Chemically Recyclable Cross-Linked Elastomers, 55, 11097-11106; R. Palmgren, S. Karlsson and A. C. Albertsson, J. Polym. Sci., Part A: Polym. Chem., 1997, Synthesis of Degradable Cross-Linked Polymers Based on 1,5-Dioxepan-2-One and Cross-Linker of bis-Epsilon Caprolactone Type, 35, 1635-1649; H. M. Younes, E. Bravo-Grimaldo and B. G. Amsden, Biomaterials, 2004, Synthesis, characterization and in vitro degradation of a biodegradable elastomer, 25, 5261-5269; and P. K. Kuroishi, K. R. Delle Chiaie and A. P. Dove, Eur. Polym. J., 2019, Polylactide thermosets using a bis (cyclic diester) crosslinker, 120, 109192.

The cross-linking monomers described in the art generally produce thermosets of inherently low moduli and high elasticity, with previous applications focusing on their use in biomedicine and coatings. The demanding material requirements needed in high-strength applications, such as in automotive or aerospace fields, remain elusive. Important targets for these materials would be robust/reusable packaging and injection moulded parts or composites which require better temperature resistance, hardness and tensile strength.

There is therefore a need for a monomer as a cross-linker for biodegradable thermosetting polyesters with improved mechanical properties, using sustainable non-petrochemical-based monomer sources, and, in particular, a method for the preparation of such a cross-linked polymer.

The present invention has been devised in the light of the above considerations.

*Summary of the Invention*

The invention seeks to address this need by providing a use of a particular compound as a cross-linking monomer for ring-opening polymerisation, and polymers comprising units derived from that monomer.

The present inventors have identified compounds such as bis(1,3-dioxolan-4-one), herein also referred to as bisDOX, as cross-linkers which imbue superior mechanical properties to polymers as compared to other cross-linking agents known in the art, especially those with similar functionality. The advantageous properties of polymers made using such cross-linkers may be employed in applications where elastomeric or cross-linked materials are currently used, such as in structural composite materials and reusable packaging.

The use of the compounds described herein may provide new affordable routes to fully biodegradable elastomeric and rigid polymeric materials from sustainable sources. A further advantage of the use of the presently described compounds as cross-linkers is their production from inherently cheap materials. For example, the synthesis of bisDOX and its derivatives may be achieved using L-(+)-tartaric acid which is naturally occurring and may be obtained as a solid by-product of fermentations.

The inventors believe that the unique strength imparted to resultant polymers by the compound may be attributed to both the conjoined ring system and the 1,3-dioxolan-4-one rings, with the identity of the tether moiety also providing a small contribution.

According to the first aspect of the present invention, there is provided a use of compound (I) as a cross-linking monomer in a ring-opening polymerisation reaction,

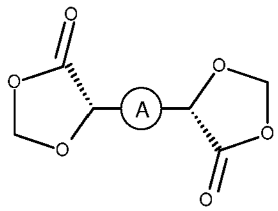

(I)

wherein A is a single bond or a group of the formula $-L^1L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of $CH_2$, C(NH), C(O), C(S), NH, O, S, S(O), and $S(O_2)$, wherein each $CH_2$, C(NH), and NH, if present, is substituted or unsubstituted.

The term "substituted or unsubstituted" herein may suitably mean unsubstituted $CH_2$, C(NH), NH or $CH_2$, C(NH), and NH substituted with one or more groups selected from -F, -Cl, -Br, -OH, $-OCH_3$, -SH, $-NH_2$, - $NHCH_3$, $-N(CH_3)_2$, $-CO_2H$, -CN and $-NO_2$.

In the case where A is a group of the formula $-L^1-L^2-L^3-L^4-L^5-L^6-L^7-L^8-L^9-L^{10}-L^{11}-L^{12}-L^{13}-L^{14}-L^{15}-$, preferably no groups selected from any of unsubstituted or substituted NH, O, S, substituted or unsubstituted S(O) or $S(O_2)$ are directly adjacent to one another.

In some embodiments, A is a single bond or a group of the formula $-CH_2CH_2SCH_2CH_2SCH_2CH_2-$. In the most preferred embodiment, A is a single bond. In such an embodiment, compound (I) is bis(1,3-dioxolan-4-one),

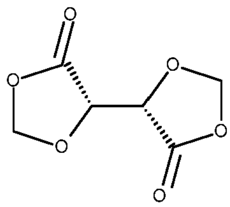

,

and is herein referred to as bisDOX.

In another preferred embodiment, A is $-CH_2CH_2SCH_2CH_2SCH_2CH_2-$. In such an embodiment, compound (I) is

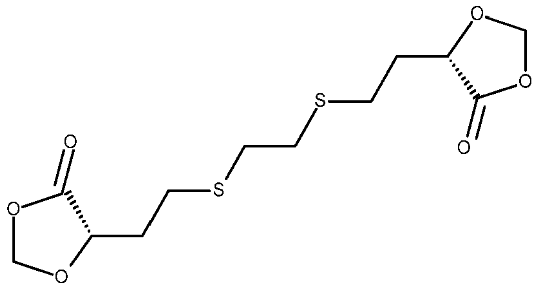

,

and is herein referred to as flexi-bisDOX.

According to the second aspect of the present invention, there is provided a cross-linked polymer, comprising at least one cross-linking unit of the following formula (II),

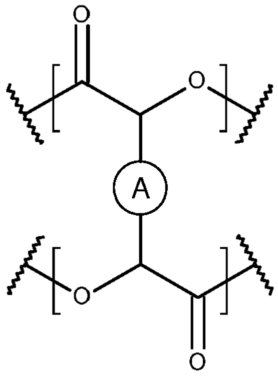

(II)

wherein A is a single bond or a group of the formula $-L^1L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of $CH_2$, C(NH), C(O), C(S), NH, O, S, S(O), and $S(O_2)$, wherein each $CH_2$, C(NH) and NH, if present, is substituted or unsubstituted.

This cross-linking unit may in some embodiments link polymeric chains formed from at least one of a cyclic ester, a cyclic amide or a cyclic carbonate, or a combination thereof, or a combination of a cyclic anhydride and an epoxide.

This cross-linking unit may in some embodiments be derived from an oxygenated monomer with a carbonyl functional group. This is because the functionality may allow for degradation via hydrolysis.

In some embodiments, A is a single bond or a group of the formula $-CH_2CH_2SCH_2CH_2SCH_2CH_2-$.

In some embodiments, the cross-linked polymer further comprises at least one unit selected from the group consisting of:

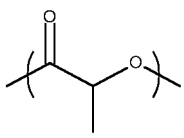 , 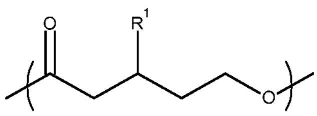 , 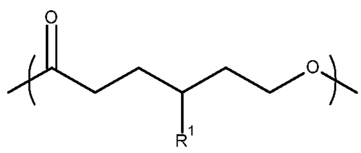 , 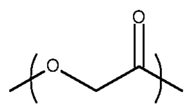 ,

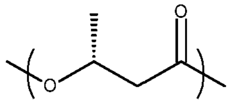 , 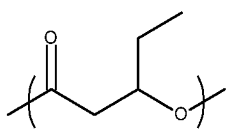 , 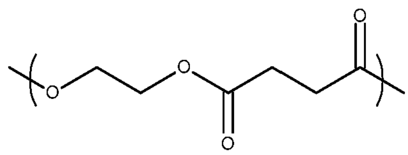 ,

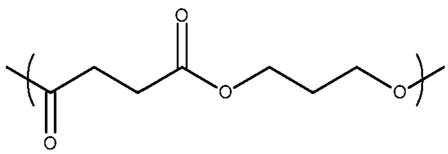 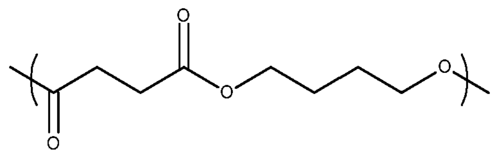 ,

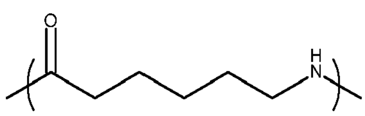 , 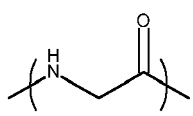 , 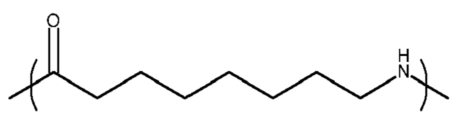 ,

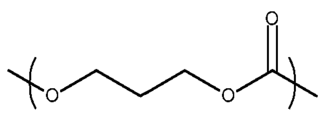 and 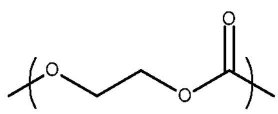 ,

wherein $R^1$ is independently H or $CH_3$.

In some embodiments, the cross-linked polymer further comprises at least one unit which is an aliphatic ester selected from the group consisting of

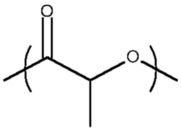, 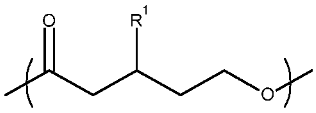, 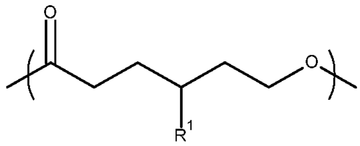, 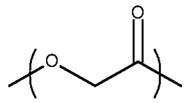,

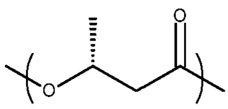, 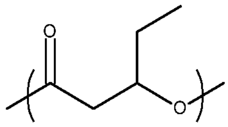, 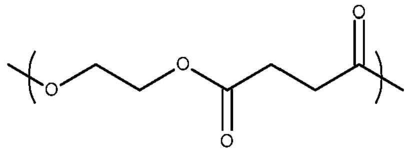,

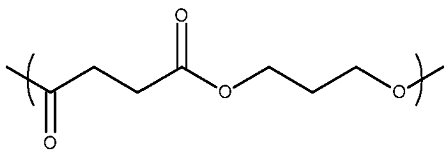, and 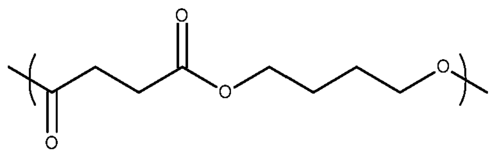,

wherein $R^1$ is independently H or $CH_3$.

In such embodiments, the cross-linked polymer comprises at least one repeat unit of polylactic acid (PLA), poly-δ-valerolactone (PVL) or a methyl-substituted version thereof, poly-ε-caprolactone (PCL) or a methyl-substituted version thereof, polyglycolic acid (PGA), polyhydroxybutyrate (PHB), poly(3-hydroxy valerate), poly(ethylene succinate) (PESu), poly(propylene succinate) (PPSu) and poly(butylene succinate) (PBSu) respectively.

In some embodiments, the cross-linked polymer further comprises at least one unit which is an aliphatic amide selected from the group consisting of

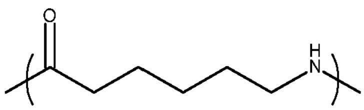, 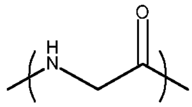, and 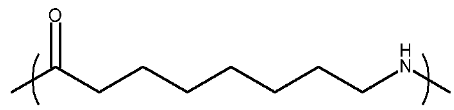.

In such embodiments, the cross-linked polymer comprises at least one repeat unit of polycaprolactam, polypropiolactam and polycapryllactam respectively.

In some embodiments, the cross-linked polymer further comprises at least one unit which is an aliphatic carbonate ester selected from the group consisting of

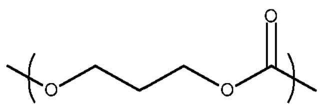 and 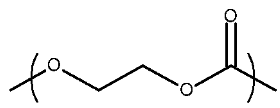.

In such embodiments, the cross-linked polymer comprises at least one repeat unit of poly(trimethylene carbonate) and poly(ethylene carbonate) respectively.

According to the third aspect of the present invention, there is provided a method of preparing a cross-linked polymer, the method comprising the step of contacting compound (I):

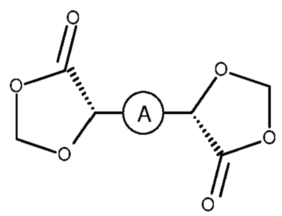 (I)

wherein A is a single bond or a group of the formula $-L^1L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of $CH_2$, C(NH), C(O), C(S), NH, O, S, S(O), and $S(O_2)$, wherein each $CH_2$, C(NH) and NH if present, is substituted or unsubstituted,

with (i) at least one of a cyclic ester, a cyclic amide or a cyclic carbonate, or a combination thereof, or a combination of a cyclic anhydride and an epoxide, optionally (ii) a catalyst, and optionally (iii) an initiator, and performing a ring-opening polymerisation reaction.

In some embodiments, the cyclic ester is one selected from β-propiolactone, β-butyrolactone, 3-methyloxetan-2-one, 5-methyl-1,3-dioxolan-4-one, γ-valerolactone, ε-caprolactone, ε-decalactone, 5,5-dimethyl-dihydro-furan-2-one, (S)-Y-hydroxymethyl-Y-butyrolactone, γ-octanoic lactone, γ-nonanoic lactone, δ-valerolactone, δ-hexalactone, δ-decalactone, δ-undecalactone, δ-dodecalactone, glycolide, L-lactide, D-lactide, meso-lactide, heptalactone, octalactone, nonalactone, decalactone or pentadecalactone, or substituted versions thereof, or a mixture thereof; the cyclic amide is one selected from caprolactam, propiolactam, capryllactam, lauric lactam, alpha-pyrrolidone, oenanthic lactam or substituted versions thereof, or any mixture thereof; the cyclic carbonate is one selected from trimethylene carbonate or ethylene carbonate or substituted versions thereof, or any mixture thereof; the cyclic anhydride is one selected from maleic anhydride, phthalic anhydride or succinic anhydride or substituted versions thereof, or any mixture thereof; and the epoxide is one selected from ethylene oxide, propylene oxide, butylene oxide or cyclohexene oxide, or substituted versions thereof, or any mixture thereof.

In preferred embodiments, (i) is a cyclic ester selected from 5-methyl-1,3-dioxolan-4-one, ε-caprolactone, δ-valerolactone and L-lactide.

In some embodiments, the molar ratio of the content of compound (I) to the total content of (i) the cyclic ester, cyclic amide, cyclic carbonate, cyclic anhydride and epoxide is 0.5 mol% to 50 mol%, preferably 1 mol% to 40 mol%, more preferably 3 mol% to 20 mol%, most preferably 4 mol% to 10 mol%.

In some embodiments, (ii) a catalyst is present. In such embodiments, the molar ratio of the content of the catalyst to the total content of cyclic ester, cyclic amide, cyclic carbonate, cyclic anhydride and epoxide may be 0.1 mol% to 10 mol%, preferably 0.5 mol% to 5 mol%, more preferably 0.75 mol% to 2 mol%.

In some embodiments, (ii) a catalyst is present, the catalyst being a metal alkoxide, a metal carboxylate, or a metal alkyl.

Preferably, the catalyst can facilitate the ring-opening polymerisation (ROP) of cyclic esters, cyclic amides or cyclic carbonates. Preferably, the catalyst can also facilitate the ring-opening copolymerisation (ROCOP) of cyclic anhydrides and epoxides. Such catalysts are well established in the technical field. Suitable catalysts for the method include, but are not limited to, [salen]AlOBn, $Sn(Oct)_2$, optionally $Sn(Oct)_2$/BnOH,and $ZnEt_2$.

In some embodiments, the catalyst is tin(II) octoate and (iii) an initiator is present, the initiator being benzyl alcohol. In some other embodiments, the catalyst is a metal carboxylate of the following formula (III),

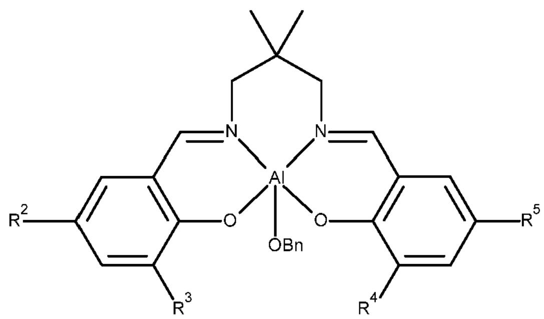

(III)

wherein each of $R^2$, $R^3$, $R^4$ and $R^5$ is independently selected from H, $CH_3$, $CH(CH_3)_2$, $C(CH_3)_3$, F, Cl, Br, OH, $OCH_3$, SH, $NH_2$, $NHCH_3$, $N(CH_3)_2$, $CO_2H$, CN or $NO_2$; and preferably each of $R^2$, $R^3$, $R^4$ and $R^5$ is H (i.e., the unsubstituted salen ligand).

In some embodiments, the ring-opening polymerisation reaction is conducted at a temperature in the range 70-120°C.

According to the fourth aspect of the present invention, there is provided a cross-linked polymer obtainable by the method specified in the third aspect.

The cross-linked polymer may be used in applications where elastomeric/cross-linked materials are currently used. These include, not are not limited to, structural composite materials, applications in construction products and adhesives, reusable packaging, automotive or aerospace applications. In these respects, it is highly advantageous that an improved mechanical strength is imparted onto the cross-linked polymer by the addition of the cross-linker compound (I).

The invention includes the combination of the aspects and preferred features described except where such a combination is clearly impermissible or expressly avoided.

***Summary of the Figures***

Embodiments and experiments illustrating the principles of the invention will now be discussed with reference to the accompanying figures in which:

**Figure 1** shows, in general terms, the method of preparation of poly(lactic acid) with bisDOX-derived cross-links, the method of preparation of poly-ε-caprolactone (PCL) with bisDOX-derived cross-links and the method of preparation of poly-δ-valerolactone (PVL) with bisDOX-derived cross-links.

**Figure 2A** shows the degradation profile for a 5 mol % bisDOX cross-linked PLA sample in 1 M aqueous NaOH solution.

**Figure 2B** shows the degradation profile for 1 mol % bisDOX cross-linked PLA, PCL and PVL respectively samples in 1 M aqueous NaOH solution.

**Figure 3** shows a frequency sweep test on PLA, PCL and PVL gels prepared at 10 M cyclic ester concentration in toluene with 5 mol% bisDOX.

**Figure 4** shows the dynamic mechanical thermal analysis (DMTA) experiments performed on PLA-1, PCL-1 and PVL-1.

**Figure 5A** shows the FTIR spectrum (neat) of the bisDOX cross-linker, L-lactide, linear PLA and cross-linked PLA with 5 mol % bisDOX, with an inset showing the distinctive carbonyl stretching frequencies at 1785 $cm^{-1}$ (bisDOX), 1739 $cm^{-1}$ (L-lactide), 1754 $cm^{-1}$ (linear PLA), 1745 $cm^{-1}$ (cross-linked PLA).

**Figure 5B** shows the FTIR spectrum of neat bisDOX with its characteristic carbonyl stretching frequency labelled at 1785 $cm^{-1}$.

**Figure 5C** shows the FTIR spectrum of neat polymer PLA-1 formed by polymerisation of PLA and bisDOX with its characteristic carbonyl stretching frequency labelled at 1749 $cm^{-1}$.

**Figure 6A** shows the FTIR spectrum (neat) of the bisDOX cross-linker, ε-caprolactone, linear PCL and cross-linked PCL with 5 mol % bisDOX, with an inset showing the distinctive carbonyl stretching frequencies at 1785 $cm^{-1}$ (bisDOX), 1721 $cm^{-1}$ (ε-caprolactone), 1720 $cm^{-1}$ (linear PCL), 1722 $cm^{-1}$ (cross-linked PCL).

**Figure 6B** shows the FTIR spectrum of neat polymer PCL-1 formed by polymerisation of PCL and bisDOX with its characteristic carbonyl stretching frequency labelled at 1722 $cm^{-1}$.

**Figure 7A** shows the FTIR spectrum (neat) of the bisDOX cross-linker, linear PVL and cross-linked PVL with 5 mol % bisDOX, with an inset showing the distinctive carbonyl stretching frequencies at 1785 $cm^{-1}$ (bisDOX), 1720 $cm^{-1}$ (linear PVL), 1722 $cm^{-1}$ (cross-linked PVL). δ-valerolactone (not shown) has a C=O stretching frequency of 1747 $cm^{-1}$.

**Figure 7B** shows the FTIR spectrum of neat polymer PVL-1 formed by polymerisation of PVL and bisDOX with its characteristic carbonyl stretching frequency labelled at 1725 $cm^{-1}$.

**Figure 7C** shows the neat FTIR spectra of the reaction mixture for forming PVL-1 at time 0, 0.5 hours, and 2 hours.

**Figure 7D** is an enlarged section of Figure 7C.

**Figure 8** shows the thermogravimetric analysis curve for 5 mol % bisDOX cross-linked PLA, PCL and PVL (PLA-1, PCL-1 and PVL-1).

**Figure 9** shows representative tensile tests of the three polymers PLA-1, PCL-1 and PVL-1.

**Figure 10** shows the $^1H$ NMR spectra ($CD_3OD$, 500 MHz) of (a) PLA-1 degradation products (in 1 M aqueous NaOH) and (b) PLA-1 degradation products (in 1 M aqueous NaOH) spiked with L-(+)-tartaric acid.

**Figure 11** shows DMTA experiments of PCL-1, PCL-1.5, PCL-2, showing the storage modulus as a function of

temperature.

**Figure 12** shows DMTA experiments of PVL-1, PVL-1.5, PVL-2, showing the storage modulus as a function of temperature.

**Figure 13** shows the dynamic mechanical thermal analysis (DMTA) experiments performed on two cross-linked PLA samples containing two different cross-linkers, namely bisDOX and flexi bisDOX, with 5 mol % incorporation.

**Figure 14** shows the representative stress-strain curve for PCL-2.

**Figure 15** shows the representative stress-strain curve for PVL-2.

***Detailed Description of the Invention***

Aspects and embodiments of the present invention will now be discussed with reference to the accompanying figures. Further aspects and embodiments will be apparent to those skilled in the art.

In the present invention, the use of compound (I) as a cross-linking monomer for ring-opening polymerisation is described.

The present invention also describes a method of the preparation of a cross-linked polymer using compound (I). General schematic representations of the method of its preparation is shown in Figure 1, where compound (I) is bisDOX. In Figure 1 (top), L-lactide and bisDOX react with a catalyst suitable for a ring-opening polymerisation at a particular temperature T°C to form cross-linked poly(lactic acid) with x and z representing the number of lactide repeat units and y representing the number of ring-opened bisDOX repeat cross-linking units. Analogously, in Figure 1 (middle), ε-caprolactone and bisDOX react with a catalyst suitable for a ring-opening polymerisation at a particular temperature T °C to form cross-linked polycaprolactone with x and z representing the number of caprolactone repeat units and y representing the number of ring-opened bisDOX repeat cross-linking units. In a similar way, in Figure 1 (bottom), δ-valerolactone and bisDOX react with a catalyst suitable for a ring-opening polymerisation at a particular temperature T°C to form cross-linked polycaprolactone with x and z representing the number of valerolactone repeat units and y representing the number of ring-opened bisDOX repeat cross-linking units. In all three reactions, a solvent may be used to dissolve the reactants, or absent in the case of a bulk polymerisation in molten or liquid monomer.

*Compound (I) as a cross-linker*

Compound (I) of the present invention is used as a cross-linking monomer for ring-opening polymerisation:

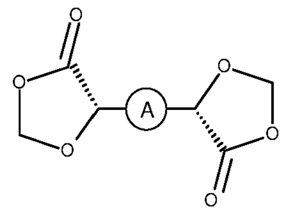

(I)

wherein A is a single bond or a group of the formula $-L^1L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of a substituted or unsubstituted 5- to 8-membered arylene group, a substituted or unsubstituted 5- to 8-membered heteroarylene group, wherein the heteroarylene group comprises at least one heteroatom selected from the group consisting of nitrogen, oxygen and sulfur; $CH_2$, C(NH), C(O), C(S), NH, O, S, S(O), and $S(O_2)$, wherein each $CH_2$, C(NH) and NH if present, is substituted or unsubstituted.

It will be appreciated that the term "substituted or unsubstituted" herein may suitably mean unsubstituted 5- to 8-membered arylene group, 5- to 8-membered heteroarylene group, $CH_2$, C(NH) and NH, or a 5- to 8-membered arylene group, a 5- to 8-membered heteroarylene group, $CH_2$, C(NH) and NH substituted with one or more groups selected from $C_{1-3}$ alkyl, -F, -Cl, -Br, -OH, $-OCH_3$, -SH, $-NH_2$, $-NHCH_3$, $-N(CH_3)_2$, $-CO_2H$, -CN and $-NO_2$.

That is, where one of $L^1$ to $L^{15}$ is a 5- to 8-membered arylene group, a 5- to 8-membered heteroarylene group, $CH_2$, C(NH) or NH , one or more of the H groups present may instead be $C_{1-3}$ alkyl, -F, -Cl, -Br, - OH, $-OCH_3$, -SH, $-NH_2$, $-NHCH_3$, $-N(CH_3)_2$, $-CO_2H$, -CN or $-NO_2$. Such a substitution may in some embodiments be selected from $C_{1-3}$ alkyl, -F, -Cl, -Br, -OH, and $-OCH_3$.

It will also be appreciated that each of $L^1$ to $L^{15}$ is separated by a single bond unless otherwise stated.

Herein, the notation $L^n$ represents a moiety in the $n^{th}$ position in the group of the formula $-L^1-L^2-L^3-L^4-L^5$.

$L^6$-$L^7$-$L^8$-$L^9$-$L^{10}$-$L^{11}$-$L^{12}$-$L^{13}$-$L^{14}$-$L^{15}$-, where n = 1 to 15. For example, $L^1$ is a moiety in the 1st position in the group.

In some embodiments, A is -$L^1$-$L^2$-$L^3$-$L^4$-$L^5$-$L^6$-$L^7$-$L^8$-$L^9$-$L^{10}$-$L^{11}$-$L^{12}$-$L^{13}$-$L^{14}$-$L^{15}$-, wherein each of $L^1$ to $L^{15}$ is absent or $CH_2$ For example, one of $L^1$ to $L^{15}$ is $CH_2$ and the rest are absent; or two of $L^1$ to $L^{15}$ are $CH_2$ and the rest are absent; or three of $L^1$ to $L^{15}$ are $CH_2$ and the rest are absent; or four of $L^1$ to $L^{15}$ are $CH_2$ and the rest are absent; or five of $L^1$ to $L^{15}$ are $CH_2$ and the rest are absent; or six of $L^1$ to $L^{15}$ are $CH_2$ and the rest are absent; or seven of $L^1$ to $L^{15}$ are $CH_2$ and the rest are absent; or eight of $L^1$ to $L^{15}$ are $CH_2$ and the rest are absent; or nine of $L^1$ to $L^{15}$ are $CH_2$ and the rest are absent; or ten of $L^1$ to $L^{15}$ are $CH_2$ and the rest are absent; or eleven of $L^1$ to $L^{15}$ are $CH_2$ and the rest are absent; or twelve of $L^1$ to $L^{15}$ are $CH_2$ and the rest are absent; or thirteen of $L^1$ to $L^{15}$ are $CH_2$ and the rest are absent; or fourteen of $L^1$ to $L^{15}$ are $CH_2$ and the rest are absent or all or $L^1$ to $L^{15}$ are $CH_2$.

**In** some embodiments, each of $L^1$ to $L^{15}$ are absent and hence A is a single bond. **In** this most preferred embodiment, compound (I) is bis(1,3-dioxolan-4-one):

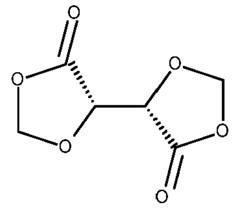

.

**In** some embodiments, at least one of $L^1$ to $L^{15}$ is NH, O, S, S(O), or $S(O_2)$. In some embodiments, at least two of $L^1$ to $L^{15}$ are S and the rest of $L^1$ to $L^{15}$ are $CH_2$. Preferably, exactly two of $L^1$ to $L^{15}$ are S and the rest of $L^1$ to $L^{15}$ are $CH_2$. More preferably, $L^n$ and $L^{n+3}$ are S, wherein n is 1 to 5, and the rest of $L^1$ to $L^{15}$ are $CH_2$. In the most preferred embodiment, $L^3$ and $L^6$ are both S, $L^1$ to $L^8$ are $CH_2$ and $L^9$ to $L^{15}$ are absent. In this embodiment, A has the formula $-CH_2CH_2SCH_2CH_2SCH_2CH_2-$ and compound (I) is

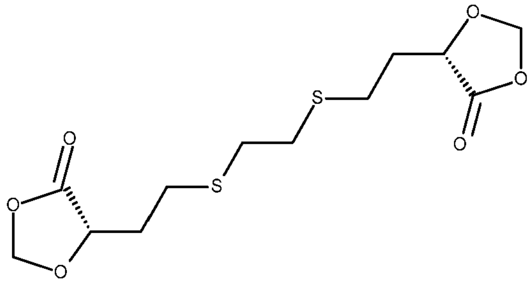

.

In some embodiments, A is -$L^1$-$L^2$-$L^3$-$L^4$-$L^5$-$L^6$-$L^7$-$L^8$-$L^9$-$L^{10}$-$L^{11}$-$L^{12}$-$L^{13}$-$L^{14}$-$L^{15}$-, wherein each of $L^1$ to $L^{15}$ is absent, or a substituted or unsubstituted 6-membered arylene group. Preferably, one of $L^1$ to $L^{15}$ is an unsubstituted 6-membered arylene group and the rest are absent. In this embodiment, compound (I) is one of

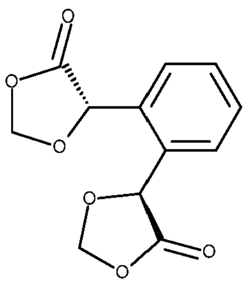

,

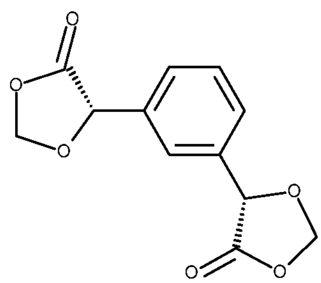

or

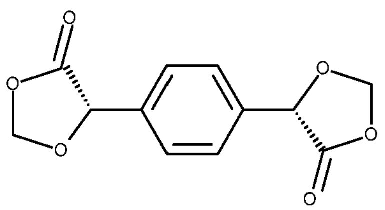

.

In some embodiments, A is -$L^1$-$L^2$-$L^3$-$L^4$-$L^5$-$L^6$-$L^7$-$L^8$-$L^9$-$L^{10}$-$L^{11}$-$L^{12}$-$L^{13}$-$L^{14}$-$L^{15}$, wherein each of $L^1$ to $L^{15}$ is absent, or a substituted or unsubstituted 5- to 6-membered heteroarylene group, wherein the heteroarylene group comprises at least one heteroatom selected from the group consisting of nitrogen, oxygen and sulfur. Preferably, one of $L^1$ to $L^{15}$ is an unsubstituted 5-membered heteroarylene group and the rest are absent.

In some embodiments, each of $L^1$ to $L^{15}$ is independently absent, or selected from the group consisting of $CH_2$, C(NH), C(O) or C(S).

For example, when $L^1$ is C(O) and each of $L^2$ to $L^{15}$ is absent, A is -C(O)-. When $L^1$ is C(NH) and each of $L^2$ to $L^{15}$ is absent, A is -C(NH)-. When $L^1$ is C(S) and each of $L^2$ to $L^{15}$ is absent, A is -C(S)-. Preferably, exactly one of $L^1$ to $L^{15}$ is C(O) and the rest of $L^1$ to $L^{15}$ are independently absent or $CH_2$.

For example, when $L^1$ is C(O), $L^2$ is C(O) and each of $L^3$ to $L^{15}$ is absent, A is -C(O)C(O)-. When $L^1$ is C(O), $L^2$ is $CH_2$, $L^3$ is C(O) and each of $L^4$ to $L^{15}$ is absent A is $-C(O)CH_2C(O)-$. When $L^1$ is C(O), $L^2$ is $CH_2$, $L^3$ is $CH_2$, $L^4$ is C(O) and each of $L^5$ to $L^{15}$ is absent, A is $-C(O)CH_2CH_2C(O)-$.

In some embodiments, A is $-L^1-L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of $CH_2$, C(NH), C(O) or C(S), wherein when $L^n$ is C(NH), C(O) or C(S), at least one of $L^{n+1}$ and $L^{n-1}$, where present, is $CH_2$, NH, O or S. Preferably, exactly one of $L^n$ is C(O), at least one of $L^{n+1}$ and $L^{n-1}$, where present, is O and the rest of $L^1$ to $L^{15}$ are independently absent or $CH_2$.

For example, when $L^1$ is C(O), $L^2$ is $CH_2$, and each of $L^3$ to $L^{15}$ is absent, A is $-C(O)CH_2-$. When $L^1$ is C(O), $L^2$ is O and each of $L^3$ to $L^{15}$ is absent, A is -C(O)O-. When $L^1$ is C(O), $L^2$ is NH and each of $L^3$ to $L^{15}$ is absent, A is -C(O)NH-. When $L^1$ is C(O), $L^2$ is S and each of $L^2$ to $L^{15}$ is absent, A is -C(O)S-.

For example, when $L^1$ is C(NH), $L^2$ is $CH_2$, and each of $L^3$ to $L^{15}$ is absent, A is $-C(NH)CH_2-$. When $L^1$ is C(NH), $L^2$ is O and each of $L^3$ to $L^{15}$ is absent, A is -C(NH)O-. When $L^1$ is C(NH), $L^2$ is NH and each of $L^3$ to $L^{15}$ is absent, A is -C(NH) NH-. When $L^1$ is C(NH), $L^2$ is S and each of $L^2$ to $L^{15}$ is absent, A is -C(NH)S-.

For example, when $L^1$ is C(S), $L^2$ is $CH_2$, and each of $L^3$ to $L^{15}$ is absent, A is $-C(S)CH_2-$. When $L^1$ is C(S), $L^2$ is O and each of $L^3$ to $L^{15}$ is absent, A is -C(S)O-. When $L^1$ is C(S), $L^2$ is NH and each of $L^3$ to $L^{15}$ is absent, A is -C(S)NH-. When $L^1$ is C(S), $L^2$ is S and each of $L^2$ to $L^{15}$ is absent, A is -C(S)S-.

In some embodiments, A is $-L^1-L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of NH, O, S, S(O), and $S(O_2)$, wherein when $L^n$ is NH, O, S, S(O), and $S(O_2)$, at least one of $L^{n+1}$ and $L^{n-1}$, where present, is $CH_2$, C(NH), C(O) or C(S). Preferably, exactly one of $L^1$ to $L^{15}$ is O and the rest of $L^1$ to $L^{15}$ are independently absent or $CH_2$.

For example, when $L^1$ is NH and each of $L^2$ to $L^{15}$ is absent, A is -NH-. When $L^1$ is O and each of $L^2$ to $L^{15}$ is absent, A is -O-. When $L^1$ is S and each of $L^2$ to $L^{15}$ is absent, A is -S-. When $L^1$ is S(O) and each of $L^2$ to $L^{15}$ is absent, A is -S(O)-. When $L^1$ is $S(O_2)$ and each of $L^2$ to $L^{15}$ is absent, A is $-S(O_2)-$.

In some embodiments, A is $-L^1-L^2-L^3-L^4-L^5-L^6-L^7-L^8-L^9-L^{10}-L^{11}-L^{12}-L^{13}-L^{14}-L^{15}-$, where $L^n$ is NH or O, at least one of $L^{n+1}$ and $L^{n-1}$, where present, is $CH_2$, C(NH), C(O) or C(S).

In some embodiments, A is $-L^1-L^2-L^3-L^4-L^5-L^6-L^7-L^8-L^9-L^{10}-L^{11}-L^{12}-L^{13}-L^{14}-L^{15}-$, where $L^n$ is S, at least one of one of $L^{n+1}$ and $L^{n-1}$, where present, is one of $CH_2$, C(NH), C(O), C(S), S, S(O), and $S(O_2)$. Preferably, $L^4$ is S, $L^5$ is S, the rest of $L^1$ to $L^8$ is $CH_2$, and the rest of $L^9$ to $L^{15}$ is absent, such that A is $-CH_2CH_2CH_2SSCH_2CH_2CH_2-$, more preferably $L^4$ is S, $L^5$ is S, each of $L^2$, $L^3$, $L^6$, $L^7$ is $CH_2$, $L^1$ and $L^8$ to $L^{15}$ are absent, such that A is $-CH_2CH_2SSCH_2CH_2-$, more preferably $L^4$ is S, $L^5$ is S, each of $L^3$ and $L^6$ is $CH_2$ and each of $L^1$, $L^2$, $L^7$, and $L^8$ to $L^{15}$ is absent, such that A is $-CH_2SSCH_2-$, most preferably $L^4$ is S, $L^5$ is S, and the rest of $L^1$ to $L^{15}$ is absent, such that A is -SS-.

In some embodiments, A is $-L^1-L^2-L^3-L^4-L^5-L^6-L^7-L^8-L^9-L^{10}-L^{11}-L^{12}-L^{13}-L^{14}-L^{15}-$, where $L^n$ is S(O) or $S(O_2)$, at least one of one of $L^{n+1}$ and $L^{n-1}$, where present, is $CH_2$, C(NH), C(O), C(S), NH, O, S, S(O), or $S(O_2)$. Preferably, exactly one of $L^1$ to $L^{15}$ is S(O) or $S(O_2)$ and the rest of $L^1$ to $L^{15}$ are independently absent or $CH_2$.

A shorter chain length, wherein $L^1$ to $L^8$ are selected from the group consisting of $CH_2$, C(NH), C(O), C(S), NH, O, S, and $L^9$ to $L^{15}$ are absent, is generally more preferable for compound (I) to maintain good rigidity in the resulting cross-linked polymer.

Similarly, a ring system, wherein at least one of $L^1$ to $L^{15}$ is a 5- to 8-membered arylene group or a 5- to 8-membered heteroarylene group and the rest of $L^1$ to $L^{15}$ is independently absent or $CH_2$, may also provide sufficient rigidity.

Rigidity is important to ensure high mechanical strength in the cross-linked polymer. A longer chain length in compound (I) may generally introduce elastomeric behaviour in the cross-linked polymer

*Method of preparation of cross-linked polymer*

The cross-linked polymer of this invention may be prepared by a method of preparing a cross-linked polymer, the method comprising the step of contacting compound (I):

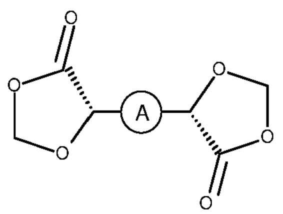

(I)

wherein A is a single bond or a group of the formula $-L^1L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of $CH_2$, C(NH), C(O), C(S), NH, O, S, S(O), and $S(O_2)$, wherein each $CH_2$, C(NH) and NH, if present, is substituted or unsubstituted, with (i) at least one of a cyclic ester, a cyclic amide or a cyclic carbonate, or a combination thereof, optionally (ii) a catalyst, and optionally (iii) an initiator, and performing a ring-opening polymerisation reaction.

The molecular weight of the cross-linked polymer prepared by the method of the invention may vary within wide limits and can be turned to meet specific properties by selecting the molar ratio between compound (I), catalyst, and cyclic ester, cyclic amide, cyclic carbonate, cyclic anhydride and epoxide where present.

*Catalyst*

The method may include the use of (ii) a catalyst, and optionally (iii) an initiator. Suitably, a catalyst can facilitate the ring-opening polymerisation (ROP) of cyclic esters, cyclic amides or cyclic carbonates to produce polyesters, polyamides or polycarbonates, respectively. The catalyst can also facilitate the ring-opening copolymerisation (ROCOP), a subcategory of ring-opening polymerisation, of cyclic anhydrides and epoxides, to produce polycarbonates or poly(alkylene succinates). The mechanism and initiation of ring-opening polymerisation is well known to the skilled person in this technical field and is for instance described in "Handbook of Ring-opening Polymerization, 2009, Eds. Philippe Dubois, Olivier Coulembier, Jean-Marie Raquez, Wiley VCH, ISBN: 978 3 527 31953 4".

These catalysts should ideally show living/controlled polymerisation behaviour. Preferably, the catalysts are stable in the presence of an excess of protic chain transfer agents, which creates an immortal catalyst system allowing the production of multiple polymer chains per active site without loss of activity and while maintaining good control over the molecular weight, *Đ* and polymer microstructure (random and block copolymers) as well as topology (linear, star-shaped (co-) polymers).

Such catalysts are well established in the technical field. Preferably, the catalyst is a metal alkoxide, a metal carboxylate, a metal alkyl or an organocatalyst. Suitable metal-based catalysts for the method include, but are not limited to, [salen]AlOBn, tin(II) octoate, especially where used with benzyl alcohol ($Sn(Oct)_2$/BnOH), and $ZnEt_2$. In the most preferred embodiment, the catalyst is the pre-initiated metal carboxylate species [salen]AlOBn, and in some embodiments can be generally represented by formula (III),

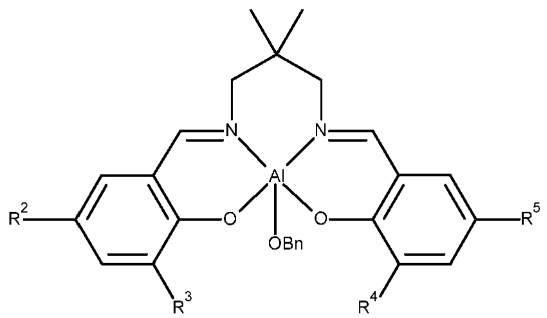

(III)

wherein each of $R^2$, $R^3$, $R^4$ and $R^5$ is independently selected from H, $CH_3$, $CH(CH_3)_2$, $C(CH_3)_3$, F, Cl, Br, OH, $OCH_3$, SH, $NH_2$, $NHCH_3$, $N(CH_3)_2$, $CO_2H$, CN or $NO_2$. In preferred embodiments each of $R^2$, $R^3$, $R^4$ and $R^5$ is H.

In some embodiments, $Sn(Oct)_2$, optionally $Sn(Oct)_2$/BnOH, may be the preferred catalyst/initiator system as it is stable in air.

Suitable organocatalysts include triazabicyclodecene (TBD), 1,8-diazabicyclo[5.4.0]undec-7-ene (DBU) and organophosphorus catalysts including diphenyl phosphates, bis(4-nitrophenyl)phosphate, di(2,6-xylyl)phosphate and phosphazene bases.

In the case of the $Sn(Oct)_2$ catalyst, it will be appreciated that an alcohol such as BnOH could be used as an initiator for the $Sn(Oct)_2$ to initiate ring-opening polymerisation and thus an alcohol such as BnOH solely on its own is not defined as a catalyst but as an initiator.

The amount of catalyst for the method is not required to be particularly high. For example, a suitable molar ratio of the content of the catalyst to the total content of cyclic ester, cyclic amide, cyclic carbonate, cyclic anhydride and epoxide may be 0.1 mol% to 10 mol%, preferably 0.5 mol% to 5 mol%, more preferably 0.75 mol% to 2 mol%.

The molar ratio may be calculated by dividing the total number of moles of catalyst against the total number of moles of cyclic ester, cyclic amide, cyclic carbonate, cyclic anhydride and epoxide and converting into a percentage according to the formula below:

$$molar\ ratio\ of\ catalyst\ to\ monomer\ (mol\ \%) = \frac{mol\ of\ catalyst}{mol\ of\ monomer} \times 100$$

For example, the total number of moles of catalyst may be 1 moles, the total number of moles of cyclic ester, cyclic amide, cyclic carbonate, cyclic anhydride and epoxide may be 100 moles, and therefore the molar ratio of the content of the catalyst to the total content of cyclic ester, cyclic amide, cyclic carbonate, cyclic anhydride and epoxide is 1 mol %.

*Monomers*

The method includes (i) at least one of a cyclic ester, a cyclic amide or a cyclic carbonate, or a combination thereof, or a combination of a cyclic anhydride and an epoxide. The selection of cyclic esters, cyclic amides, cyclic carbonates, cyclic anhydrides and epoxides to be used in the ring-opening polymerisation reaction along with the cross-linker compounds explained herein is not particularly limited. One type of monomer may be used in the method to produce a homopolymer with cross-links derived from compound (I). Alternatively, multiple types of monomers may be used in the method to produce a copolymer with cross-links derived from compound (I).

Suitable cyclic esters include β-propiolactone, β-butyrolactone, 3-methyloxetan-2-one, γ-valerolactone, caprolactone, ε-caprolactone, ε-decalactone, 5,5-dimethyl-dihydro-furan-2-one, (S)-Y-hydroxymethyl-Y-butyrolactone, γ-octanoic lactone, γ-nonanoic lactone, δ-valerolactone, δ-hexalactone, δ-decalactone, δ-undecalactone, δ-dodecalactone, glycolide, lactide (L, D**,** meso), heptalactone, octalactone, nonalactone, decalactone, 3-hydroxybutyrolactone, $\beta$-valerolactone, ethylene succinate, propylene succinate and butylene succinate and substituted versions thereof. The cyclic ester used in the reaction may be one of these, or a mixture of two or more of these.

Suitable cyclic amides include caprolactam, propiolactam, capryllactam, lauric lactam, alpha-pyrrolidone, oenanthic lactam and substituted versions thereof. The cyclic amide used in the reaction may be one of these, or a mixture of two or more of these.

Suitable cyclic carbonates include trimethylene carbonate and ethylene carbonate and substituted versions thereof. The cyclic carbonate used in the reaction may be one of these, or a mixture of two or more of these.

Suitable cyclic anhydrides include maleic anhydride, phthalic anhydride and succinic anhydride and substituted versions thereof. The cyclic anhydride used in the reaction may be one of these, or a mixture of two or more of these.

Suitable epoxides include ethylene oxide, propylene oxide, butylene oxide and cyclohexene oxide and substituted versions thereof. The epoxide used in the reaction may be one of these, or a mixture of two or more of these.

A suitable molar ratio of the content of compound (I) to the total content of cyclic ester, cyclic amide cyclic carbonate, cyclic anhydride and epoxide may be 0.5 mol% to 50 mol%, preferably 1 mol% to 40 mol%, more preferably 2 mol% to 30 mol%, more preferably 3 mol% to 20 mol%, most preferably 4 mol% to 10 mol%. Generally, a higher molar ratio produces a cross-linked polymer with a greater proportion of soluble portions, while a lower molar ratio produces a cross-linked polymer with a greater extent of gel-like consistency in the structure. A lower molar ratio may be preferable to prevent inefficient cross-linking via the homopolymerisation of the cyclic ester, cyclic amide, cyclic carbonate, cyclic anhydride/epoxide and/or the prevalence of unreacted starting material. The inventors have specifically found that about 5 mol% bisDOX incorporation is an ideal balance to provide particularly efficient cross-linking.

The molar ratio may be calculated by dividing the total number of moles of compound (I) against the total number of moles of cyclic ester, cyclic amide, cyclic carbonate, cyclic anhydride and epoxide and converting into a percentage according to the formula below:

$$molar\ ratio\ of\ compound\ (I)\ to\ monomer\ (mol\ \%) = \frac{mol\ of\ compound\ (I)}{mol\ of\ monomer} \times 100$$

For example, the total number of moles of compound (I) may be 50 moles, the total number of moles of cyclic ester, cyclic amide, cyclic carbonate, cyclic anhydride and epoxide may be 100 moles, and therefore the molar ratio of the content of compound (I) to the total content of cyclic ester, cyclic amide, cyclic carbonate, cyclic anhydride and epoxide is 50 mol %.

The molar ratio of compound (I) to the total content of cyclic ester, cyclic amide, cyclic carbonate, cyclic anhydride and epoxide may be adjusted accordingly to best suit the application of the resulting cross-linked polymer. For example, a generally higher molar ratio may be applied to obtain a cross-linked polymer of greater rigidity and mechanical strength. In this instance, in some cases, a higher molar ratio can also lead to inefficient cross-linking as described above. Therefore, it will be appreciated that the skilled person will be able to find a balance between the molar ratio of the content of compound (I) to the total content of cyclic ester, cyclic amide, cyclic carbonate, cyclic anhydride and epoxide in order to obtain a cross-linked polymer of the desired mechanical properties while maintaining sufficient conversion of compound (I) into cross-links.

The method of determining the extent of cross-linking in a quantitative manner may be done by determining gel contents as calculated in Example 6 (Table 1), or by determining cross-linking density from DMTA data for bisDOX and flexi-bisDOX-containing resins as calculated in Example 10 (Table 3).

*Polymerisation Reaction conditions*

In some embodiments, a solvent is used in the method, for dissolving compound (I) with the cyclic ester, cyclic amide, cyclic carbonate, or combination of cyclic anhydride and epoxide. The solvent is preferably an organic solvent, for example a solvent comprising toluene, benzene, xylene, cyclohexane or acetonitrile or mixtures thereof. In a preferred embodiment, the solvent is toluene. In some embodiments, such as in a bulk polymerisation, a solvent is not used, and the method may be conducted in neat. Such embodiments may be found useful when compound (I) can be dissolved in the cyclic ester, cyclic amide, cyclic carbonate, or combination of cyclic anhydride and epoxide.

The atmosphere in which the reaction takes place in may be dependent on the nature of the catalyst. Preferably, an inert atmosphere comprising nitrogen or argon gas is used when the catalyst, for example, [salen]AlOBn, is air sensitive. For other catalysts which are significantly less air- and moisture-sensitive, for example, the $Sn(Oct)_2$/BnOH catalyst system, the reaction may be conducted either under an inert atmosphere or in air for ease of experimental setup.

The temperature of reaction may generally be a temperature about or below the boiling point of the solvent, and may be dependent on the particular cyclic ester, cyclic amide, cyclic carbonate, cyclic anhydride and epoxide used. In general, a temperature of 70-120°C is useful.

The duration of reaction is not particularly limited; of course, the longer it is carried out the closer the conversion of monomers achieves equilibrium. To ensure that conversion of monomers reach equilibrium, the resultant cross-linked polymer gel may also be allowed to cure for a longer time. Suitable times for this step are 8 to 24 hours, more preferably 10 to 20 hours, most preferably 14 to 18 hours.

The features disclosed in the foregoing description, or in the following claims, or in the accompanying drawings, expressed in their specific forms or in terms of a means for performing the disclosed function, or a method or method for obtaining the disclosed results, as appropriate, may, separately, or in any combination of such features, be utilised for realising the invention in diverse forms thereof.

The exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

***Examples***

*General Considerations*

All oxygen and moisture-sensitive reactions were performed under an inert atmosphere using standard Schlenk techniques on a dual-manifold Schlenk line equipped with an in-line gas drying column containing a copper catalyst or in a nitrogen-filled glovebox, unless otherwise stated. All glassware and moulds were pre-dried in an oven at 200 °C overnight.

*Materials*

All reagents were used as received unless otherwise indicated. Anhydrous toluene was obtained from an MBraun 7 Solvent Purification System containing alumina and copper catalysts and degassed *via* three successive freeze-pump-thaw cycles prior to use. $CDCl_3$ (99.8 atom% D, Aldrich), ε-caprolactone (98%, Sigma-Aldrich), δ-valerolactone (>95 %, Aldrich), benzyl alcohol (Fluorochem Ltd.) were all stirred over $CaH_2$ (Aldrich) and distilled under reduced pressure. Tin (II) octanoate (Aldrich) was purified by triple distillation under high vacuum. L-lactide (99%, Corbion) was

stored in the vacuum oven at 25 °C overnight, followed by a double sublimation under reduced pressures and stored under inert atmosphere. 1-Cyanoallyl (TCI), 2,2-dimethyl-1,3-propanediamine (Fluorochem Ltd.), trimethyl aluminium (2.0 M in hexanes, Aldrich), L-lactic acid (Fluorochem Ltd.), L-(+)-tartaric acid (Aldrich), para-toluene sulfonic acid monohydrate (Aldrich), paraformaldehyde (Aldrich),1,2-ethanedithiol (Aldrich) were used as received. Azobisisobutyronitrile (Aldrich) was recrystallised twice from acetone prior to use.

*Instrumentation*

All $^1$H and $^{13}$C NMR spectra were obtained on Bruker Avance 400 and 500 MHz instruments. All spectra were obtained at ambient temperatures unless otherwise stated. The chemical shifts ($\delta$) and coupling constants (J) were recorded in parts per million (ppm) and Hertz (Hz) respectively. The residual solvent peaks of the deuterated solvents were used as reference and spectra was recorded relative to it.

Differential Scanning Calorimetry (DSC) was performed on a DSC 2500 TA instrument equipped with a TA refrigerated cooling system RCS 90 using a heat (-80- 220 °C)/cool(220- -80 °C)/heat(-80-220 °C) cycle at a rate of 10 °C/min. Values of $T_g$ and $T_m$ were obtained from the second heating scan. All analyses were performed in triplicate. $T_g$ was calculated from the maximum value of the derivative of heat flow with respect to temperature.

Rheological measurements were made by using a stress-controlled TA DH2 rheometer with a 20 mm parallel plate geometry at 1 mm gap. All tests were performed under air. Oscillatory frequency sweeps were performed at 1% strain, ensuring that all gels remained in the linear viscoelastic regime. The frequency range for those experiments was from 0.1 to 100 rad $s^{-1}$.

Fourier transform infrared (FTIR) spectra were obtained using a Bruker INVENIO instrument with a Smart Orbit diamond single bounce crystal. The data reported are the average of 32 scans and were acquired using a resolution of 4 $cm^{-1}$ at room temperature.

Dynamic mechanical thermal analysis (DMTA) was performed using a Q800 DMA (TA Instruments, USA) operating in either a three point bend mode on rectangular bar samples (60 mm × 12 mm × 3 mm) or in a thin film mode on rectangular samples (7 mm × 5 mm × 1.5 mm) with a heating regime of -80 °C to 120 °C at 3 °C $min^{-1}$, and a measurement frequency of 1 Hz with an oscillating strain of 0.05%. All analyses were performed in triplicate.

The cross-linking density was calculated following a literature procedure and using the storage modulus (*E*') at 100 °C and equation 1, where E' and G' are the storage and shear moduli, respectively, *R* is the universal gas constant, *T* is the absolute temperature in the rubbery region (*ca.* 373 K).

$$E'(T)=3G'(T)=3RT\nu_e \qquad (1)$$

$E'(T)=3G'(T)=3RT\nu_e$ (1)

Tensile tests were conducted on a Static Testing Instron 3344L3928 fitted with either a 100 N or 500 N load cell. Elastomeric samples, matching ISO 37-3 were tested at 200 mm/min. Rigid samples, matching ISO 527-2-1 BB, were tested at constant speeds of 0.5 mm/min. The strain at break ($\varepsilon_b$), stress at break ($\sigma_b$) and Young's Modulus (E) were measured and calculated. A minimum of 5 samples were tested per sample batch accordant with both ISO standards used. Samples according to the respective ISO standards for tensile testing were obtained either by CNC milling performed in the University of Manchester workshops (for PLA), or by using a die-cutter (for PCL and PVL).

Swelling tests were performed using DCM. A small amount of each cross-linked sample was immersed in DCM for 24 h before the solvent was decanted. The swollen sample was then dried under vacuum for 24 h or until constant weight before the final mass was measured. The gel fraction was calculated by taking the ratio of the final mass to the initial mass.

Thermogravimetric analysis (TGA) was performedusing a TA Instruments Q800 instrument. The samples (10-25 mg) were heated in nitrogen from room temperature to 600 °C at 5 °C $min^{-1}$.

***EXAMPLE** 1*

*Synthesis of bisDOX*

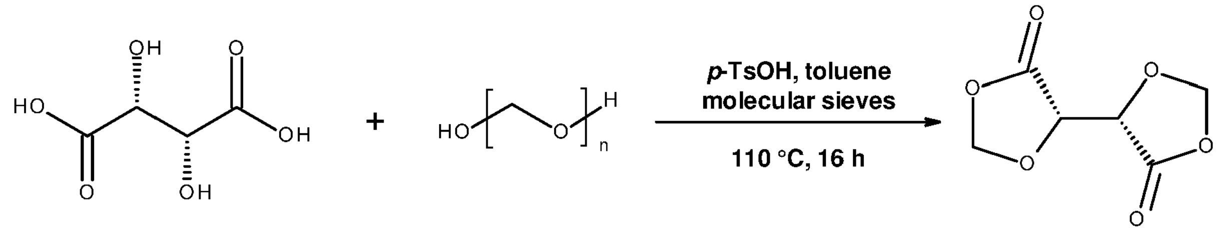


**BisDOX**

L-(+)-tartaric acid (0.33 mol, 50 g), paraformaldehyde (1.33 mol, 40 g) and *p*-TsOH·$H_2O$ (0.065 mol, 11.53 g) were dissolved in toluene (700 mL). Previously dried molecular sieves (4 Å) were added and the reaction mixture was refluxed at 110 °C overnight. The mixture was allowed to cool to room temperature and ethyl acetate (150 mL) was added to the reaction mixture. It was then washed with saturated $NaHCO_3$ solution (250 mL), deionised water (250 mL) and saturated aqueous NaCl solution (250 mL). The organic fraction was dried over $MgSO_4$ and concentrated *in vacuo.* It was then dissolved in THF and precipitated from hexane. The product was afforded as white fluffy crystals in 36 % isolated yield.

**$^1$H NMR** ($CDCl_3$, 500 MHz): δ 5.60 (s, 2H), 5.55 (s, 2H), 4.70 (s, 2H);

**$^{13}$C NMR:** δ 170.08, 95.97, 72.61.

**HR-ESI-MS** calculated for $C_6H_6O_6$ $[M+H]^+$ 175.0237, found 175.0231.

***EXAMPLE 2a***

*Synthesis of vinyl-DOX*

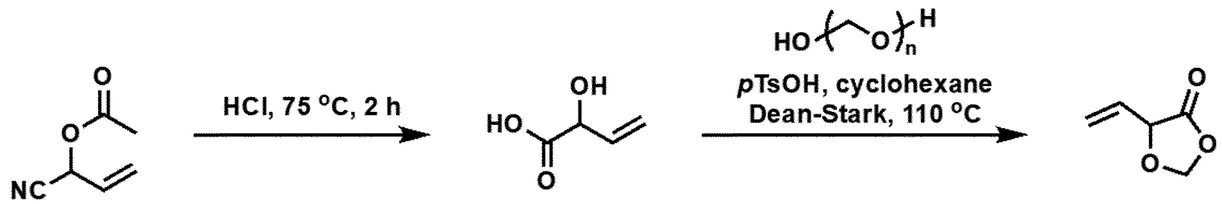


Concentrated HCl (20 mL) was added dropwise to 1-cyanoallyl acetate (0.16 mol, 20 g). The solution was refluxed for 2 h, followed by cooling to room temperature. Water was added to dissolve the ammonium salts and the α-hydroxy-acid was extracted by diethyl ether (10 x 30 mL). The organic phase was collected, dried over $MgSO_4$ and concentrated *in vacuo.*

The α-hydroxy-acid (45.7 mmol, 4.67 g), paraformaldehyde (5.5 g) and *p*-TsOH·$H_2O$ (8.93 mmol, 1.7 g) were dissolved in cyclohexane (400 mL). The reaction mixture was refluxed at 110 °C and water was removed *via* azeotropic distillation using a Dean-Stark apparatus over 3 h. The mixture was cooled and EtOAc was added, followed by aqueous-basic washing with saturated $NaHCO_3$ solution (200 mL), deionised water (200 mL) and saturated aqueous NaCl solution (200 mL). The mixture was dried over $MgSO_4$ and concentrated in vacuo. Distillation under reduced pressure afforded vinylDOX as a colourless oil in 20% yield.

**$^1$H NMR** ($CDCl_3$, 500 MHz): δ 5.85-5.77 (m, 1H), 5.55-5.36 (m, 2H), 5.50 (s, 1H), 5.44 (s, 1H), 4.65 (d, 1H);

**$^{13}$C NMR:** δ 170.93, 129.14, 120.02, 94.41, 73.63;

***EXAMPLE 2b***

*Synthesis of flexi-bisDOX*

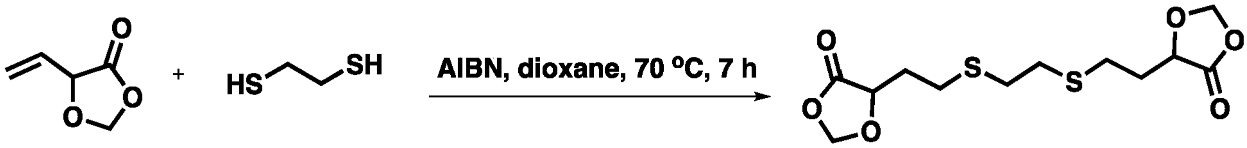

To a solution of vinylDOX (17.35 mmol, 1.98 g) in 1,4-dioxane (3.6 mL) was added 1,2-ethanedithiol (9.12 mmol 0.8592g), followed by a solution of AIBN (7.608 mL, 1.3694 mmol in toluene). The solution was transferred to an ampoule and degassed by freeze-pump-thaw cycles (3 ×). The flask was filled with $N_2$ and then heated to 70 °C. After stirring the solution for 16 h at this temperature, the solvent was evaporated. The reaction mixture precipitated in cold with hexane to afford the novel flexi-bisDOX as a white fluffy solid in 36 % yield.

**$^1$H NMR** ($CDCl_3$, 500 MHz): δ 5.55, (s, 1H), 5.44 (s, 1H), 4.40 (m, 1H), 2.80-2.68 (m, 4H), 2.20-2.03 (m, 2H);

**$^{13}$C NMR:** δ 172.68, 92.26, 71.41, 31.80, 40.27, 27.30, 22.68, 14.15.

**HR-ESI-MS** calculated for $C_{12}H_{18}O_6NaS_2$ $[M+Na]^+$ 345.0430, found 345.0437.

## ***EXAMPLE 3***

*Representative cross-linking procedure for PLA-1*

In a nitrogen filled glovebox, the catalyst, cross-linker and monomer (10 g) were weighted out directly in an oven-dried vial. The contents were mixed thoroughly using a spatula. The vial was then sealed, removed from the glovebox and placed in a glovebag (Aldrich, AtmosBag). After degassing the contents, the mixture was poured in pre-heated steel moulds pre-sprayed with a PTFE mould-release spray (Rocol). The moulds were covered, and the samples were left to cure at 120 °C. After 16 h, the samples were cooled down and removed from the moulds.

FTIR spectra of the monomer bisDOX and cross-linked PLA (PLA-1) as described above are shown in Figures 5B and 5C.

## ***EXAMPLE 4***

*Representative cross-linking procedure for PCL-1* and PVL-1

In a nitrogen filled glovebox, the catalyst, cross-linker and monomer (10 g) were weighted out directly in an oven-dried vial. The vial was then sealed, removed from the glovebox and the contents were ultrasonicated for 5 minutes to ensure good mixing. They were then and placed in a glovebag (Aldrich, AtmosBag). After degassing the contents, the mixture was poured in a pre-heated Petri dish pre-sprayed with a PTFE mould-release spray (Rocol). The samples were covered were left to cure at 120 °C. After 16 h, the samples were cooled down and peeled from the dishes.

FTIR spectra of the cross-linked PCL and PVL (PCL-1 and PVL-1) as described above are shown in Figures 6B and 7B.

## ***EXAMPLE 5***

*bisDOX copolymerisations with L-lactide, ε-caprolactone and δ-valerolactone using $Sn(Oct)_2$*

$Sn(Oct)_2$, a catalyst that has been deemed air-stable and effective for reported *in situ* cross-linking reactions using bifunctional cross-linkers, was employed as a catalyst along with BnOH as initiator for the copolymerisation of bisDOX with ε-caprolactone and L-lactide.

The results from the reaction show that $Sn(Oct)_2$ is also effective for cross-linking copolymerisations. This catalyst, along with BnOH as initiator, was also employed in the copolymerisations of bisDOX (5 mol%) with L-lactide, ε-caprolactone and δ-valerolactone and all of them formed cross-linked polymers.

## ***EXAMPLE 6***

*Infrared spectroscopy and swelling studies*

bisDOX (5 mol% relative to amount of the comonomer) was copolymerised with PLA, PCL and PVL (95 mol% in each case relative to the amount of bisDOX) with [salen]AlOBn catalyst (1 mol% relative to the amount of cyclic ester) to form cross-linked polymers PLA-1, PCL-1 and PVL-1, respectively. In these examples, the numeral after the polymer name indicates the molar percent of catalyst used in the polymerisation.

The cross-linking progress was monitored by FTIR spectroscopy. Disappearance of the distinctive carbonyl stretching frequency corresponding to the bisDOX cross-linker was observed (1785 $cm^{-1}$, Figure 5B), as well as the appearance of a new carbonyl peak from the ring-opened products (1749 $cm^{-1}$, 1722 $cm^{-1}$, 1725 $cm^{-1}$ for PLA-1, PCL-1 and PVL-1 respectively, Figures 5C, 6B, 7B), indicating that bisDOX indeed ring-opens to yield new aliphatic ester bonds. Moreover, the synthesis of PVL-1 was also monitored in situ (Figures 7C and 7D) by FTIR spectroscopy. The distinctive carbonyl stretching frequency attributed to bisDOX (1785 $cm^{-1}$) can be seen to decrease in intensity over time.

Conventional linear aliphatic polyesters are highly soluble in organic solvents such as toluene or tetrahydrofuran, whereas cross-linked materials are insoluble in a variety of solvents and are subject to swelling. Solubility tests were performed in order to assess the state of the materials, and none of them were soluble in solvents such as toluene, hexane, tetrahydrofuran, dimethylformamide, tetrahydrofuran or water. Swelling tests performed in dichloromethane revealed high gel contents (Table 1) in the materials, confirming the formation of efficiently cross-linked materials.

Table 1. Gel contents for the synthesised cross-linked polyesters.

| **Sample** | **Gel%** |
|---|---|
| PLA-1 | 95 |
| PLA-1.5 | 95 |
| PLA-2 | 89 |
| PCL-1 | 86 |
| PCL-1,5 | 89 |
| PCL-2 | 89 |
| PVL-1 | 84 |
| PVL-1.5 | 67 |
| PVL-2 | 82 |

***EXAMPLE 7***

*Effect of catalyst concentration*

Polymers were prepared as set out in Examples 3 and 4 except with either 1.5 or 2 mol% of catalyst. Changing the catalyst concentration had no significant impact on the thermal properties (Table 1). **PCL-1.5** and **PCL-2,** along with **PVL-1.5 and PVL-2** exhibited virtually the same $T_g$ and $T_m$ values as their **PCL-1** and **PVL-1** counterparts.

With reference to storage modulus, no significantly different behaviour for the **PCL** family was observed for different catalyst concentrations (Figure 11). The plateau cross-link density however is clearly higher for PCL-1 compared to PCL-1.5 and PCL-2. No significant impact of catalyst concentration change was visible for the PVL family either. The plateau modulus in the rubbery region, which influences the cross-link density, was higher for PVL-1.5 and PVL-2 than for PVL-1, suggesting increasing the catalyst contents allows for a more efficient cross-linking for PVL.

**Table 2.** Thermal and mechanical properties of thermosets with varying catalyst loadings.

| Sample | $T_g$ (°C)a | $T_m$ (°C)[a] | $T_c$ (°C)a | $T_{d,5\%}$ (°C)[b] | $\sigma_b$ (MPa)[e] | $\varepsilon_b$ (%)[e] | E (MPa)[e] |
|---|---|---|---|---|---|---|---|
| PLA-1.5 | 63.6 | - | - | 254 | - | - | - |
| PLA-2 | 63.1 | - | - | 243 | - | - | - |
| PCL-1.5 | -52.7 | 33.5 | -6.0 | 276 | - | - | - |
| PCL-2 | -53.1 | 35.9 | -2.3 | 272 | 8.19±0.15 | 39.37±8.8 | 86±1 |
| PVL-1.5 | -54.7 | 31.7 | -17.5 | 232 | - | - | - |
| PVL-2 | -52.5 | 33.5 | -20.6 | 230 | 8.55±0.18 | 75.3±9.2 | 87±3 |

***EXAMPLE 8***

*DSC studies*

DSC analyses were employed in order to qualitatively assess the effect of cross-linking on the systems. A clear trend was observed with regards to the $T_g$ of these new materials **(Error! Reference source not found.).** PLA-1, PCL-1 and PVL-1 present with increased $T_g$ values compared with the homopolymers. No melting peak can be observed in the second DSC thermogram for PLA-1, indicating the amorphous nature of this polymer network; this is in contrast to the linear PLA, which shows the usual endotherm from the melting of crystalline domains. For PCL-1 and PVL-1 however, a melting transition was still observed, albeit with depressed melting points compared to their linear counterparts. This

suggests that along with the hindered chain mobility from network formation, crystallisation was also partially impeded. Changing the catalyst concentration had no significant impact on the thermal properties of our materials (Table 2). PLA-1.5, PLA-2, PCL-1.5 and PCL-2, along with PVL-1.5 and PVL-2 exhibited virtually the same $T_g$ and $T_m$ values as their PLA-1, PCL-1 and PVL-1 counterparts.

***EXAMPLE 9***

*Frequency sweep studies*

Frequency sweep tests were performed in order to assess the rheological behaviour of the synthesised PLA, PCL and PVL gels of various compositions. PLA, PCL and PVL gels with 5 mol% bisDOX incorporation were prepared at 10 M cyclic ester (L-lactide, ε-CL and δ-VL) concentration. Oscillatory frequency sweeps were performed at 1% strain and angular frequency (ω) was varied to measure storage (G') and loss (G") moduli of the gels at different experimental timescales while ensuring the gels remained in the linear viscoelastic regime (Figure 3).

It will be recognised that G', storage modulus, represents the elastic portion of the viscoelastic behaviour of a material and is indicative of the material's ability to store deformation energy elastically. Consequently, G' is related to the stiffness and shape recovery of a material during loading. If a plot of G' is a straight line this implies that G' is independent of angular frequency ω, meaning a cross-linked polymer is present.

It will also be recognised that G", loss modulus, represents the viscous portion of the viscoelastic behaviour of a material is indicative of the material's ability to store energy in an elastic structure. Consequently, G" is related to the material's ability to disperse mechanical energy through internal molecular motions. Increasing the crosslink density may lead to a minor increase in G" and a significant increase in G'. Where G' is greater than G" for the same angular frequency ω, this implies there is an increased ability to store deformation energy in an elastic manner, and therefore there is a greater degree of crosslinking in the polymer.

The frequency sweep plots for PLA, PCL and PVL gels provide further insight into the rheological behaviour of the materials. It can be observed that the storage modulus G' is generally independent of angular frequency ω, as expected from a covalently linked network. Moreover, G' is dominant over G" at all frequencies, indicating a strong solid-like response from the networks. During cross-linking, the number of conformations available for the polymer chains significantly decreases, resulting in a decrease in entropy. However, an increase in conformational entropy is imparted by Brownian motion which requires relaxation of the polymer chains, but since the networks are constrained, the relaxation is rather slow. The storage moduli values for PLA gels remain constant at around G' = 811 000 Pa, whereas the PCL gels are characterised by lower G' = 50 000 Pa and PVL gels by even lower G' = 27 000, indicating that the PLA gels are stiffer than the PCL and PVL counterparts. A variety of factors are known to affect gel stiffness such as cross-linking density and molecular weight of the polymer chains but in this case, the spacing of cross-linking could prove key. PCL chains are theoretically longer than PLA chains, thus making the gel softer as a result of shorter relaxation times. Both G' and G" show a slight increase with change in timescale for the two gel types, suggesting that while angular frequency is increased, relaxation time decreases and this may be further proof for the increased stiffness of the networks.

***EXAMPLE 10***

*DMTA studies*

The graph in Figure 13 clearly demonstrates a drop in modulus while heating through the glass transition temperature ($T_g$) of more than two orders of magnitude. The plateau modulus appears relatively constant in the 80 - 120 °C region, consistent with the presence of a network structure. However, the more flexible cross-linker flexi-bisDOX yielded networks with lower modulus and lower cross-link density, both indicative of a more constrained network in the case of bisDOX-cross-linked PLA.

DMTA studies allowed for cross-link density calculations to be made (Table 2).

**Table 3:** Comparison between 5 mol % bisDOX-containing PLA networks and 5 mol% flexi-bisDOX-containing PLA networks. $T_g$ data was obtained from the second heating curve on the DSC, whereas plateau modulus values were taken from the DMTA studies.

| Cross-linker used | $T_g$ (°C) | E' at 100 °C (MPa) | $v_e$ ($10^{-4}$ mol $cm^{-3}$) |
|---|---|---|---|
| bisDOX | 62.7 | 39 | 42 |
| Flexi-bisDOX | 53.5 | 5 | 5.3 |

***EXAMPLE 11***

*Thermogravimetric Analysis*

TGA analysis revealed the 5 mol % bisDOX cross-linked PLA,PCL and PVL samples have a high thermal stability, with decomposition temperatures ($T_{d,5\%}$) values of 305 °C for PLA-1,308 °C for PCL-1 and 229 for PVL-1 respectively (Figure 8).

***EXAMPLE 12***

*Degradation studies*

The cross-linked systems synthesised above are based on polyesters. In theory, these should hence be biodegradable due to the labile ester bonds present that can be hydrolysed chemically or enzymatically.

Thin, rectangular pieces (40 × 4 × 1 mm) of PLA-1, PCL-1 and PVL-1 were immersed in phosphate buffer saline (PBS), and 1 M aqeuous NaOH at ambient temperatures. Their hydrolytic degradation in aqueous acidic media and in artificial seawater was also studied. We detected virtually no mass loss for the samples in PBS or artificial seawater. Furthermore, the samples in acidic conditions displayed minimal mass loss (≤ 8%). However, in the presence of NaOH, we were able to completely degrade PLA-1 in 14 days, PCL-1 in 10 days and PVL-1 in less than 1 day. (Figure 2B) When investigating the effect of surface area over degradation kinetics, we found that PLA-1 bars (60×12×3 mm) degrade in 35 days, more than double the time it takes for PLA-1 films. Upon investigation of the degradation products, we could conclude the cross-linked polyesters degrade into soluble oligomeric species. More importantly, $^{1}$H NMR spectroscopic experiments indicate the L-(+)-tartaric acid used to synthesised bisDOX is a product of degradation, allowing recovery of the starting material (Figure 10).

***EXAMPLE 13***

*Mechanical Testing*

Tensile testing performed at room temperatures enabled the investigation of the properties of PLA-1, PCL-1 and **PVL-1.** We found that PLA-1, being in the glassy regime at room temperature, exhibits ultimate tensile strengths of 46.6 ±3.4 MPa. For PCL-1 and PVL-1, as semi-crystalline networks, at room temperature their crystalline domains act at physical cross-links. They exhibit lower tensile strengths of 4.8±0.1 and 6.3±0.4 MPa respectively, but higher elongations at break of 50.8±9.1 and 43.9±8.2% respectively (Figure 9).

Changing the catalyst concentrations had virtually no effect on the thermal properties of our resins (Table 2) and it was hypothesised this change would not affect the tensile properties either. For both PCL-2 and PVL-2 (Figures 14 and 15), an increase in the stress of break of 70% for PCL-2 compared to PCL-1 can be observed, and 25% increase for PVL-2. In terms of strain at break, a 22% decrease for PCL-2 when compared to **PCL-1,** but a 72% increase for PVL-2 in relation to PVL-1 can be seen.

## Claims

1. Use of compound (I) as a cross-linking monomer in a ring-opening polymerisation reaction,

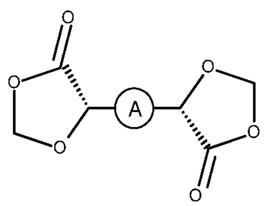

(I)

wherein A is a single bond or a group of the formula $-L^1-L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of a substituted or unsubstituted 5- to 8-membered arylene group, a substituted or unsubstituted 5- to 8-membered heteroarylene group, wherein the heteroarylene group comprises at least one heteroatom selected from the group consisting of nitrogen, oxygen and sulfur; $CH_2$, C(NH), C(O), C(S), NH, O, S, S(O), and $S(O_2)$, wherein each $CH_2$, C(NH) and NH, if present, is substituted

or unsubstituted.

**2.** The use of claim 1, wherein A is a single bond or a group of the formula $-CH_2CH_2SCH_2CH_2SCH_2CH_2-$.

**3.** A cross-linked polymer, comprising at least one cross-linking unit of the following formula (II),

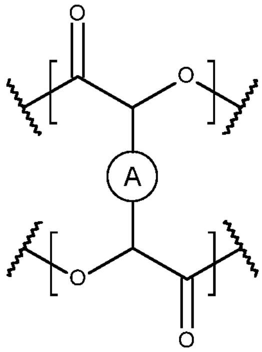

(II)

wherein A is a single bond or a group of the formula $-L^1-L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of a substituted or unsubstituted 5- to 8-membered arylene group, a substituted or unsubstituted 5- to 8-membered heteroarylene group, wherein the heteroarylene group comprises at least one heteroatom selected from the group consisting of nitrogen, oxygen and sulfur; $CH_2$, C(NH), C(O), C(S), NH, O, S, S(O), and $S(O_2)$, wherein each $CH_2$, C(NH) and NH, if present, is substituted or unsubstituted.

**4.** The cross-linked polymer of claim 3, wherein A is a single bond or a group of the formula $-CH_2CH_2SCH_2CH_2SCH_2CH_2-$.

**5.** The cross-linked polymer of claim 3 or 4, further comprising at least one unit selected from the group consisting of

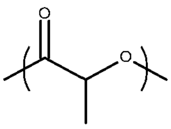 , 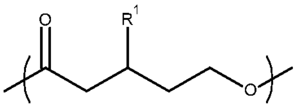 , 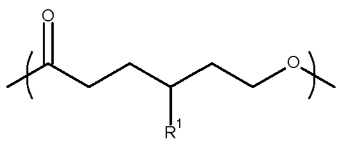 ,

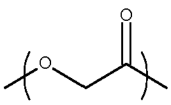 , 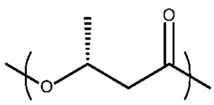 , 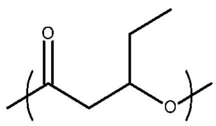 ,

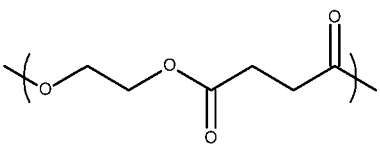 , 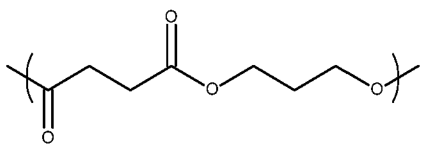 ,

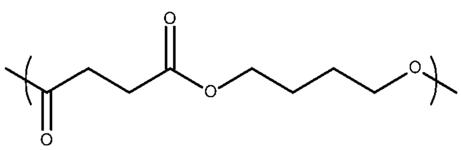 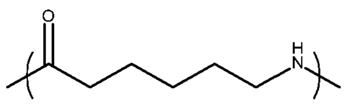 , 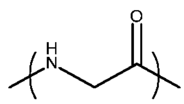 ,

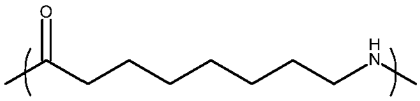, 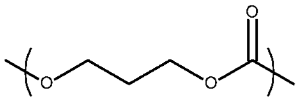 and 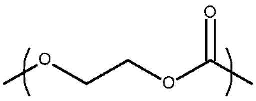,

wherein $R^1$ is independently H or $CH_3$.

**6.** A method of preparing a cross-linked polymer, the method comprising the step of contacting compound (I):

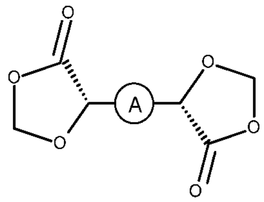

(I)

wherein A is a single bond or a group of the formula $-L^1-L^2-L^3-L^4-L^5-L^6-L^7-L^8-L^9-L^{10}-L^{11}-L^{12}-L^{13}-L^{14}-L^{15}-$, wherein each of $L^1$ to $L^{15}$ is independently absent, or selected from the group consisting of a substituted or unsubstituted 5- to 8-membered arylene group, a substituted or unsubstituted 5- to 8-membered heteroarylene group, wherein the heteroarylene group comprises at least one heteroatom selected from the group consisting of nitrogen, oxygen and sulfur; $CH_2$, C(NH), C(O), C(S), NH, O, S, S(O), and $S(O_2)$, wherein each $CH_2$, C(NH) and NH, if present, is substituted or unsubstituted.
with (i) at least one of a cyclic ester, a cyclic amide or a cyclic carbonate, or a combination thereof, or a combination of a cyclic anhydride and an epoxide, optionally (ii) a catalyst, and optionally (iii) an initiator, and performing a ring-opening polymerisation reaction.

**7.** The method of claim 6, wherein the cyclic ester is one selected from β-propiolactone, β-butyrolactone, 3-methyloxetan-2-one, γ-valerolactone, caprolactone, ε-caprolactone, ε-decalactone, 5,5-dimethyl-dihydro-furan-2-one, (S)-Y-hydroxymethyl-Y-butyrolactone, γ-octanoic lactone, γ-nonanoic lactone, δ-valerolactone, δ-hexalactone, δ-decalactone, δ-undecalactone, δ-dodecalactone, glycolide, L-lactide, D-lactide, meso-lactide, heptalactone, octalactone, nonalactone, decalactone or pentadecalactone, or substituted versions thereof, or a mixture thereof; the cyclic amide is one selected from caprolactam, propiolactam, capryllactam, lauric lactam, alpha-pyrrolidone, oenanthic lactam or substituted versions thereof, or any mixture thereof; the cyclic carbonate is one selected from trimethylene carbonate or ethylene carbonate or substituted versions thereof, or any mixture thereof; the cyclic anhydride is one selected from maleic anhydride, phthalic anhydride or succinic anhydride or substituted versions thereof, or any mixture thereof; and the epoxide is one selected from ethylene oxide, propylene oxide, butylene oxide or cyclohexene oxide, or substituted versions thereof, or any mixture thereof.

**8.** The method of claim 6 or 7, wherein the molar ratio of the content of compound (I) to the total content of (i) the cyclic ester, cyclic amide, cyclic carbonate, cyclic anhydride and epoxide is 0.5 mol% to 50 mol%, preferably 1 mol% to 40 mol%, more preferably 2 mol% to 30 mol%, more preferably 3 mol% to 20 mol%, most preferably 4 mol% to 10 mol%.

**9.** The method of any of claims 6 to 8, wherein (ii) a catalyst is present, the molar ratio of the content of the catalyst to the total content of cyclic ester, cyclic amide, cyclic carbonate, cyclic anhydride and epoxide being 0.1 mol% to 10 mol%, preferably 0.5 mol% to 5 mol%, more preferably 0.75 mol% to 2 mol%.

**10.** The method of any of claims 6 to 9, wherein (ii) a catalyst is present, the catalyst being a metal alkoxide, a metal carboxylate, a metal alkyl or an organocatalyst.

**11.** The method of claim 10, wherein the catalyst is a metal carboxylate of the following formula (III),

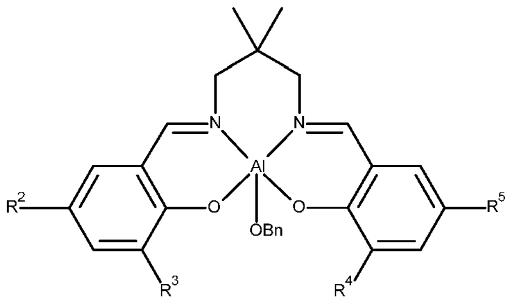

(III)

wherein each of $R^2$, $R^3$, $R^4$ and $R^5$ is independently selected from H, $CH_3$, $CH(CH_3)_2$, $C(CH_3)_3$, F, Cl, Br, OH, $OCH_3$, SH, $NH_2$, $NHCH_3$, $N(CH_3)_2$, $CO_2H$, CN or $NO_2$.

12. The method of any of claims 6 to 11, wherein the ring-opening polymerisation reaction is conducted at a temperature in the range 70-120°C.

13. A cross-linked polymer obtainable by the method of any one of claims 6 to 12.

## Patentansprüche

1. Verwendung von Verbindung (I) als ein Vernetzungsmonomer in einer Ringöffnungspolymerisationsreaktion,

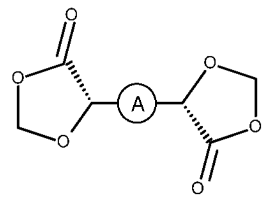

(I)

,

wobei A eine Einfachbindung oder eine Gruppe der Formel $-L^1-L^2-L^3-L^4-L^5-L^6-L^7-L^8-L^9-L^{10}-L^{11}-L^{12}-L^{13}-L^{14}-L^{15}-$ ist, wobei jedes von $L^1$ bis $L^{15}$ unabhängig fehlt oder ausgewählt ist aus der Gruppe bestehend aus einer substituierten oder unsubstituierten 5- bis 8-gliedrigen Arylengruppe, einer substituierten oder unsubstituierten 5- bis 8-gliedrigen Heteroarylengruppe, wobei die Heteroarylengruppe zumindest ein Heteroatom ausgewählt aus der Gruppe bestehend aus Stickstoff, Sauerstoff und Schwefel umfasst; $CH_2$, C(NH), C(O), C(S), NH, O, S, S(O) und $S(O_2)$, wobei jedes $CH_2$, C(NH) und NH, falls vorhanden, substituiert oder unsubstituiert ist.

2. Verwendung nach Anspruch 1, wobei A eine Einfachbindung oder eine Gruppe der Formel $-CH_2CH_2SCH_2CH_2SCH_2CH_2-$ ist.

3. Vernetztes Polymer, umfassend zumindest eine Vernetzungseinheit der folgenden Formel (II),

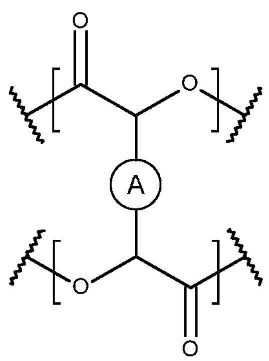

(II)

,

wobei A eine Einfachbindung oder eine Gruppe der Formel $-L^1-L^2-L^3-L^4-L^5-L^6-L^7-L^8-L^9-L^{10}-L^{11}-L^{12}-L^{13}-L^{14}-L^{15}-$ ist, wobei jedes von $L^1$ bis $L^{15}$ unabhängig fehlt oder ausgewählt ist aus der Gruppe bestehend aus einer substituierten oder unsubstituierten 5- bis 8-gliedrigen Arylengruppe, einer substituierten oder unsubstituierten 5- bis 8-gliedrigen Heteroarylengruppe, wobei die Heteroarylengruppe zumindest ein Heteroatom ausgewählt aus der Gruppe bestehend aus Stickstoff, Sauerstoff und Schwefel umfasst; $CH_2$, C(NH), C(O), C(S), NH, O, S, S(O) und $S(O_2)$, wobei jedes $CH_2$, C(NH) und NH, falls vorhanden, substituiert oder unsubstituiert ist.

**4.** Vernetztes Polymer nach Anspruch 3, wobei A eine Einfachbindung oder eine Gruppe der Formel $-CH_2CH_2SCH_2CH_2SCH_2CH_2-$ ist.

**5.** Vernetztes Polymer nach Anspruch 3 oder 4, ferner umfassend zumindest eine Einheit ausgewählt aus der Gruppe bestehend aus

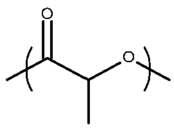 , 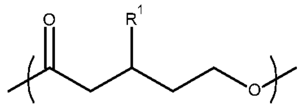 , 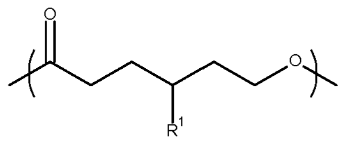 ,

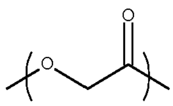 , 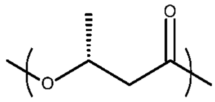 , 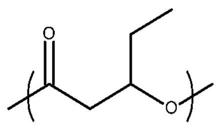 ,

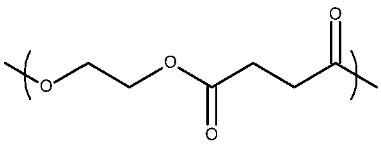 , 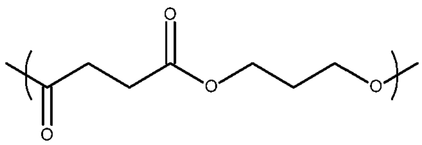 ,

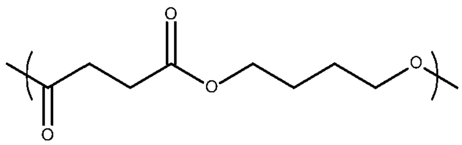 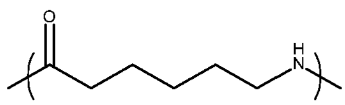 , 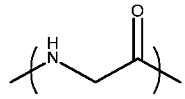 ,

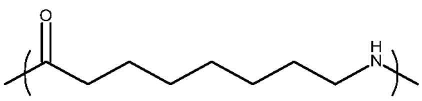 , 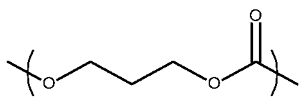 und 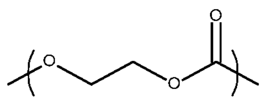 ,

wobei $R^1$ unabhängig H oder $CH_3$ ist.

**6.** Verfahren zum Herstellen eines vernetzten Polymers, wobei das Verfahren den Schritt des Kontaktierens von Verbindung (I):

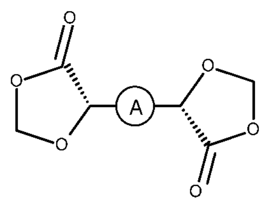 (I)

,

wobei A eine Einfachbindung oder eine Gruppe der Formel $-L^1-L^2-L^3-L^4-L^5-L^6-L^7-L^8-L^9-L^{10}-L^{11}-L^{12}-L^{13}-L^{14}-L^{15}-$

ist, wobei jedes von $L^1$ bis $L^{15}$ unabhängig fehlt oder ausgewählt ist aus der Gruppe bestehend aus einer substituierten oder unsubstituierten 5- bis 8-gliedrigen Arylengruppe, einer substituierten oder unsubstituierten 5- bis 8-gliedrigen Heteroarylengruppe, wobei die Heteroarylengruppe zumindest ein Heteroatom ausgewählt aus der Gruppe bestehend aus Stickstoff, Sauerstoff und Schwefel umfasst; $CH_2$, C(NH), C(O), C(S), NH, O, S, S(O) und $S(O_2)$, wobei jedes $CH_2$, C(NH) und NH, falls vorhanden, substituiert oder unsubstituiert ist, mit (i) zumindest einem von einem cyclischen Ester, einem cyclischen Amid oder einem cyclischen Carbonat oder einer Kombination davon oder einer Kombination eines cyclischen Anhydrids und eines Epoxids, optional (ii) einem Katalysator und optional (iii) einem Initiator und Durchführen einer Ringöffnungspolymerisationsreaktion umfasst.

7. Verfahren nach Anspruch 6, wobei der cyclische Ester einer ausgewählt aus β-Propiolacton, β-Butyrolacton, 3-Methyloxetan-2-on, γ-Valerolacton, Caprolacton, ε-Caprolacton, ε-Decalacton, 5,5-Dimethyl-dihydro-furan-2-on, (S)-Y-Hydroxymethyl-Y-butyrolacton, γ-Octansäurelacton, γ-Nonansäurelacton, δ-Valerolacton, δ-Hexalacton, δ-Decalacton, δ-Undecalacton, δ-Dodecalacton, Glycolid, L-Lactid, D-Lactid, Mesolactid, Heptalacton, Octalacton, Nonalacton, Decalacton oder Pentadecalacton oder substituierten Versionen davon oder einem Gemisch davon ist; das cyclische Amid eines ausgewählt aus Caprolactam, Propiolactam, Capryllactam, Laurinlactam, alpha-Pyrrolidon, Önanthsäurelactam oder substituierten Versionen davon oder einem beliebigen Gemisch davon ist; das cyclische Carbonat eines ausgewählt aus Trimethylencarbonat oder Ethylencarbonat oder substituierten Versionen davon oder einem beliebigen Gemisch davon ist; das cyclische Anhydrid eines ausgewählt aus Maleinsäureanhydrid, Phthalinsäureanhydrid oder Bernsteinsäureanhydrid oder substituierten Versionen davon oder einem beliebigen Gemisch davon ist; und das Epoxid eines ausgewählt aus Ethylenoxid, Propylenoxid, Butylenoxid oder Cyclohexenoxid oder substituierten Versionen davon oder einem beliebigen Gemisch davon ist.

8. Verfahren nach Anspruch 6 oder 7, wobei das Molverhältnis des Gehalts an Verbindung (I) zu dem Gesamtgehalt (i) des cyclischen Esters, des cyclischen Amids, des cyclischen Carbonats, des cyclischen Anhydrids und des Epoxids 0,5 Mol-% bis 50 Mol-%, bevorzugt 1 Mol-% bis 40 Mol-%, bevorzugter 2 Mol-% bis 30 Mol-%, bevorzugter 3 Mol-% bis 20 Mol-%, am bevorzugtesten 4 Mol-% bis 10 Mol-% ist.

9. Verfahren nach einem der Ansprüche 6 bis 8, wobei (ii) ein Katalysator vorhanden ist, wobei das Molverhältnis des Gehalts des Katalysators zu dem Gesamtgehalt von cyclischem Ester, cyclischem Amid, cyclischem Carbonat, cyclischem Anhydrid und Epoxid 0,1 Mol-% bis 10 Mol-%, bevorzugt 0,5 Mol-% bis 5 Mol-%, bevorzugter 0,75 Mol-% bis 2 Mol-% ist.

10. Verfahren nach einem der Ansprüche 6 bis 9, wobei (ii) ein Katalysator vorhanden ist, wobei der Katalysator ein Metallalkoxid, ein Metallcarboxylat, ein Metallalkyl oder ein Organokatalysator ist.

11. Verfahren nach Anspruch 10, wobei der Katalysator ein Metallcarboxylat der folgenden Formel (III) ist,

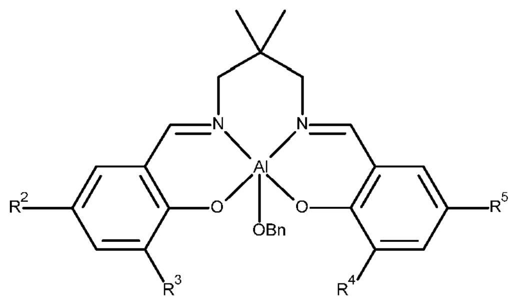

(III)

,

wobei jedes von $R^2$, $R^3$, $R^4$ und $R^5$ unabhängig ausgewählt ist aus H, $CH_3$, $CH(CH_3)_2$, $C(CH_3)_3$, F, Cl, Br, OH, $OCH_3$, SH, $NH_2$, $NHCH_3$, $N(CH_3)_2$, $CO_2H$, CN oder $NO_2$.

12. Verfahren nach einem der Ansprüche 6 bis 11, wobei die Ringöffnungspolymerisationsreaktion bei einer Temperatur in dem Bereich von 70-120 °C durchgeführt wird.

13. Vernetztes Polymer, das durch das Verfahren nach einem der Ansprüche 6 bis 12 erhaltbar ist.

## Revendications

**1.** Utilisation de composé (I) comme monomère de réticulation dans une réaction de polymérisation par ouverture de cycle,

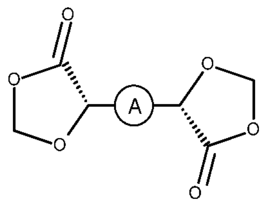

(I)

A étant une liaison simple ou un groupe de formule $-L^1-L^2-L^3-L^4-L^5-L^6-L^7-L^8-L^9-L^{10}-L^{11}-L^{12}-L^{13}-L^{14}-L^{15}-$, chacun desdits $L^1$ à $L^{15}$ étant indépendamment absent, ou choisi dans le groupe constitué par un groupe arylène à 5 à 8 chaînons substitué ou non substitué, un groupe hétéroarylène à 5 à 8 chaînons substitué ou non substitué, ledit groupe hétéroarylène comprenant au moins un hétéroatome choisi dans le groupe constitué par l'azote, l'oxygène et le soufre ; $CH_2$, C(NH), C(O), C(S), NH, O, S, S(O) et $S(O_2)$, chaque $CH_2$, C(NH) et NH, s'il est présent, étant substitué ou non substitué.

**2.** Utilisation de la revendication 1, dans laquelle A est une liaison simple ou un groupe de formule $-CH_2CH_2SCH_2CH_2SCH_2CH_2-$.

**3.** Polymère réticulé, comprenant au moins une unité de réticulation de formule (II) suivante,

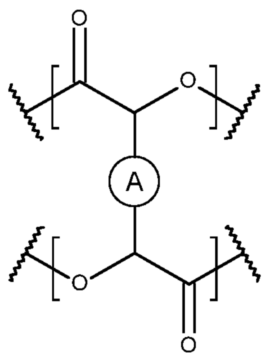

(II)

A étant une liaison simple ou un groupe de formule $-L^1-L^2-L^3-L^4-L^5-L^6-L^7-L^8-L^9-L^{10}-L^{11}-L^{12}-L^{13}-L^{14}-L^{15}-$, chacun desdits $L^1$ à $L^{15}$ étant indépendamment absent, ou choisi dans le groupe constitué par un groupe arylène à 5 à 8 chaînons substitué ou non substitué, un groupe hétéroarylène à 5 à 8 chaînons substitué ou non substitué, ledit groupe hétéroarylène comprenant au moins un hétéroatome choisi dans le groupe constitué par l'azote, l'oxygène et le soufre ; $CH_2$, C(NH), C(O), C(S), NH, O, S, S(O) et $S(O_2)$, chaque $CH_2$, C(NH) et NH, s'il est présent, étant substitué ou non substitué.

**4.** Polymère réticulé de la revendication 3, dans lequel A est une liaison simple ou un groupe de formule $-CH_2CH_2SCH_2CH_2SCH_2CH_2-$.

**5.** Polymère réticulé de l'une des revendications 3 ou 4, comprenant en outre au moins une unité choisie dans le groupe constitué par

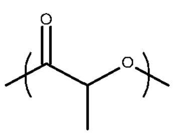 , 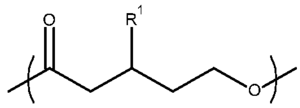 , 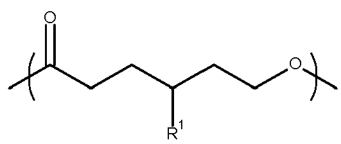 ,

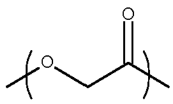,
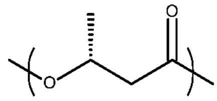,
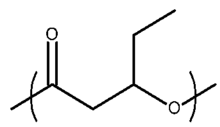,

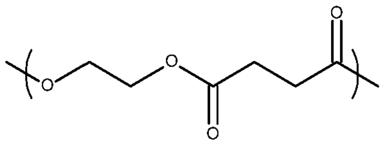,
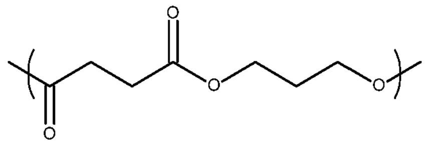,

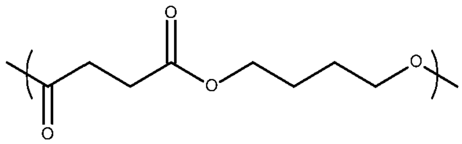
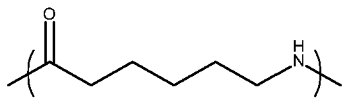,
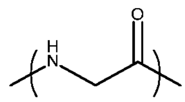,

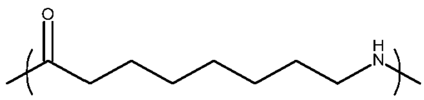,
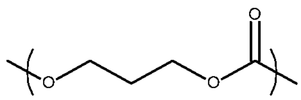
et
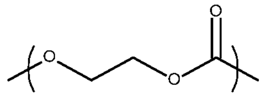,

$R^1$ étant indépendamment H ou $CH_3$.

**6.** Procédé de préparation d'un polymère réticulé, le procédé comprenant l'étape de mise en contact du composé (I) :

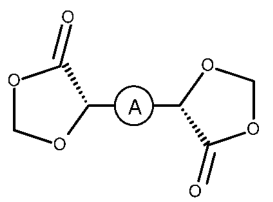

(I)

A étant une liaison simple ou un groupe de formule $-L^1-L^2-L^3-L^4-L^5-L^6-L^7-L^8-L^9-L^{10}-L^{11}-L^{12}-L^{13}-L^{14}-L^{15}-$, chacun desdits $L^1$ à $L^{15}$ étant indépendamment absent, ou choisi dans le groupe constitué par un groupe arylène à 5 à 8 chaînons substitué ou non substitué, un groupe hétéroarylène à 5 à 8 chaînons substitué ou non substitué, ledit groupe hétéroarylène comprenant au moins un hétéroatome choisi dans le groupe constitué par l'azote, l'oxygène et le soufre ; $CH_2$, C(NH), C(O), C(S), NH, O, S, S(O) et $S(O_2)$, chaque $CH_2$, C(NH) et NH, s'il est présent, étant substitué ou non substitué,

avec (i) au moins l'un d'un ester cyclique, d'un amide cyclique ou d'un carbonate cyclique, ou une combinaison de ceux-ci, ou une combinaison d'un anhydride cyclique et d'un époxyde, éventuellement (ii) un catalyseur, et éventuellement (iii) un initiateur, et la réalisation d'une réaction de polymérisation par ouverture de cycle.

**7.** Procédé de la revendication 6, dans lequel l'ester cyclique est l'un choisi parmi la β-propiolactone, la β-butyrolactone, la 3-méthyloxétan-2-one, la γ-valérolactone, la caprolactone, l'ε-caprolactone, l'ε-décalactone, la 5,5-diméthyl-dihydro-furan-2-one, la (S)-Y-hydroxyméthyl-Y-butyrolactone, la lactone γ-octanoïque, la lactone y-nonanoïque, la δ-valérolactone, la δ-hexalactone, la δ-décalactone, la δ-undécalactone, la δ-dodécalactone, un glycolide, le L-lactide, le D-lactide, le méso-lactide, l'heptalactone, l'octalactone, la nonalactone, la décalactone ou la pentadécalactone, ou des versions substituées de ceux-ci, ou un mélange de ceux-ci ; l'amide cyclique est l'un choisi parmi le caprolactame, le propiolactame, le capryllactame, le lactame laurique, l'alpha-pyrrolidone, le lactame œnanthique ou des versions substituées de ceux-ci, ou tout mélange de ceux-ci ; le carbonate cyclique est l'un choisi parmi le carbonate de triméthylène ou le carbonate d'éthylène ou des versions substituées de ceux-ci, ou tout mélange de ceux-ci ; l'anhydride cyclique est l'un choisi parmi l'anhydride maléique, l'anhydride phtalique ou l'anhydride succinique ou des versions substituées de ceux-ci, ou tout mélange de ceux-ci ; et l'époxyde est l'un choisi parmi

l'oxyde d'éthylène, l'oxyde de propylène, l'oxyde de butylène ou l'oxyde de cyclohexène, ou des versions substituées de ceux-ci, ou tout mélange de ceux-ci.

**8.** Procédé de l'une des revendications 6 ou 7, dans lequel le rapport molaire entre la teneur en composé (I) et la teneur totale en (i) ester cyclique, amide cyclique, carbonate cyclique, anhydride cyclique et époxyde est de 0,5 % en moles à 50 % en moles, de préférence de 1 % en moles à 40 % en moles, idéalement de 2 % en moles à 30 % en moles, idéalement de 3 % en moles à 20 % en moles, mieux encore de 4 % en moles à 10 % en moles.

**9.** Procédé de l'une quelconque des revendications 6 à 8, dans lequel (ii) un catalyseur est présent, le rapport molaire entre la teneur en catalyseur et la teneur totale en ester cyclique, en amide cyclique, en carbonate cyclique, en anhydride cyclique et en époxyde étant de 0,1 % en moles à 10 % en moles, de préférence de 0,5 % en moles à 5 % en moles, idéalement de 0,75 % en moles à 2 % en moles.

**10.** Procédé de l'une quelconque des revendications 6 à 9, dans lequel (ii) un catalyseur est présent, le catalyseur étant un alcoxyde métallique, un carboxylate métallique, un alkyle métallique ou un organocatalyseur.

**11.** Procédé de la revendication 10, dans lequel le catalyseur est un carboxylate métallique de formule (III) suivante,

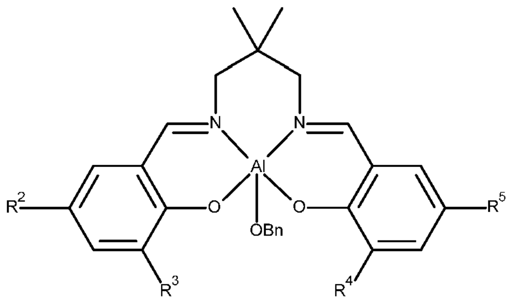

(III)

chacun de $R^2$, $R^3$, $R^4$ et $R^5$ étant indépendamment choisi parmi H, $CH_3$, $CH(CH_3)_2$, $C(CH_3)_3$, F, Cl, Br, OH, $OCH_3$, SH, $NH_2$, $NHCH_3$, $N(CH_3)_2$, $CO_2H$, CN ou $NO_2$.

**12.** Procédé de l'une quelconque des revendications 6 à 11, dans lequel la réaction de polymérisation par ouverture de cycle est conduite à une température située dans la plage de 70 à 120 °C.

**13.** Polymère réticulé pouvant être obtenu par le procédé de l'une quelconque des revendications 6 à 12.

# *Figure 1*

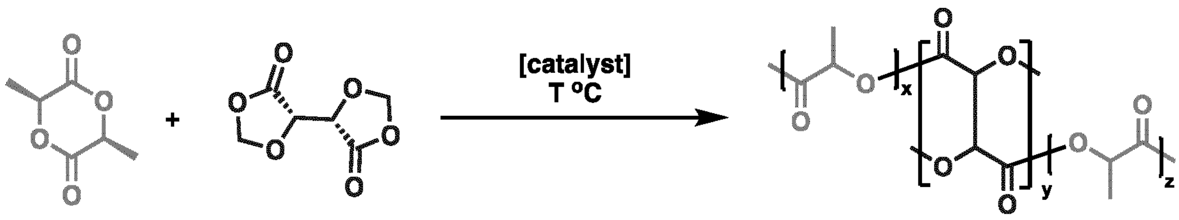


*L*-lactide bisDOX

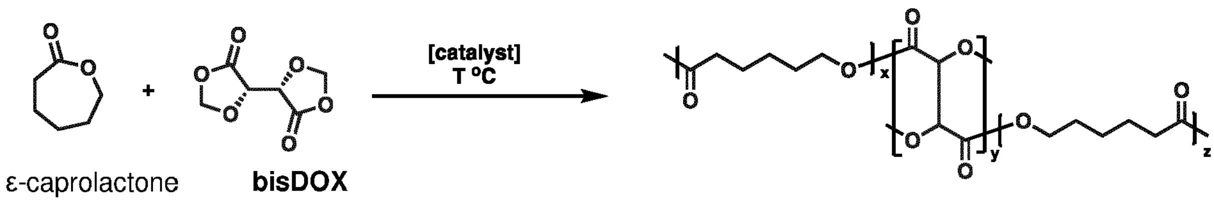


ε-caprolactone **bisDOX**

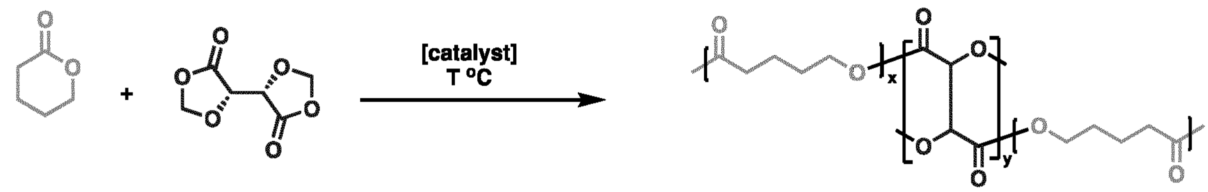


δ-valerolactone **bisDOX**

*Figure 2A*

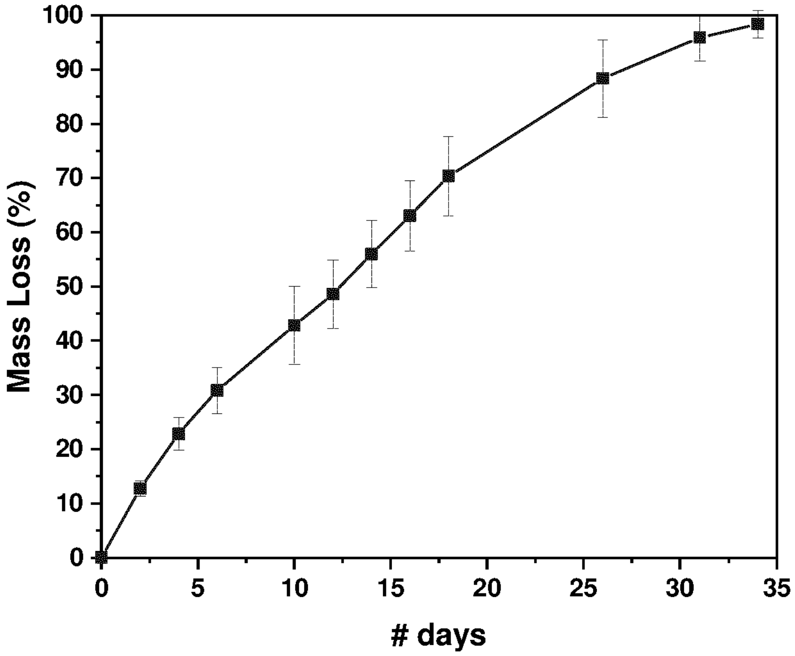


*Figure 2B*

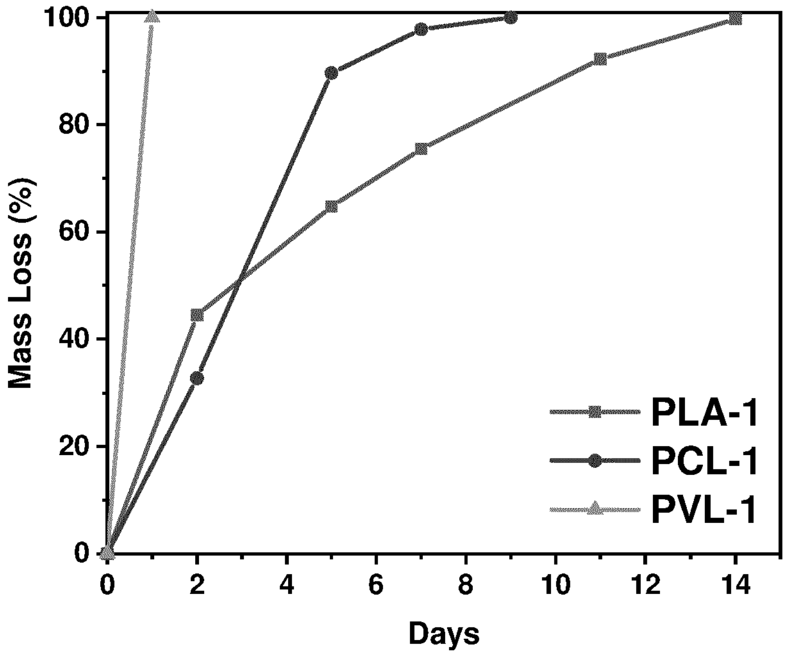

*Figure 3*

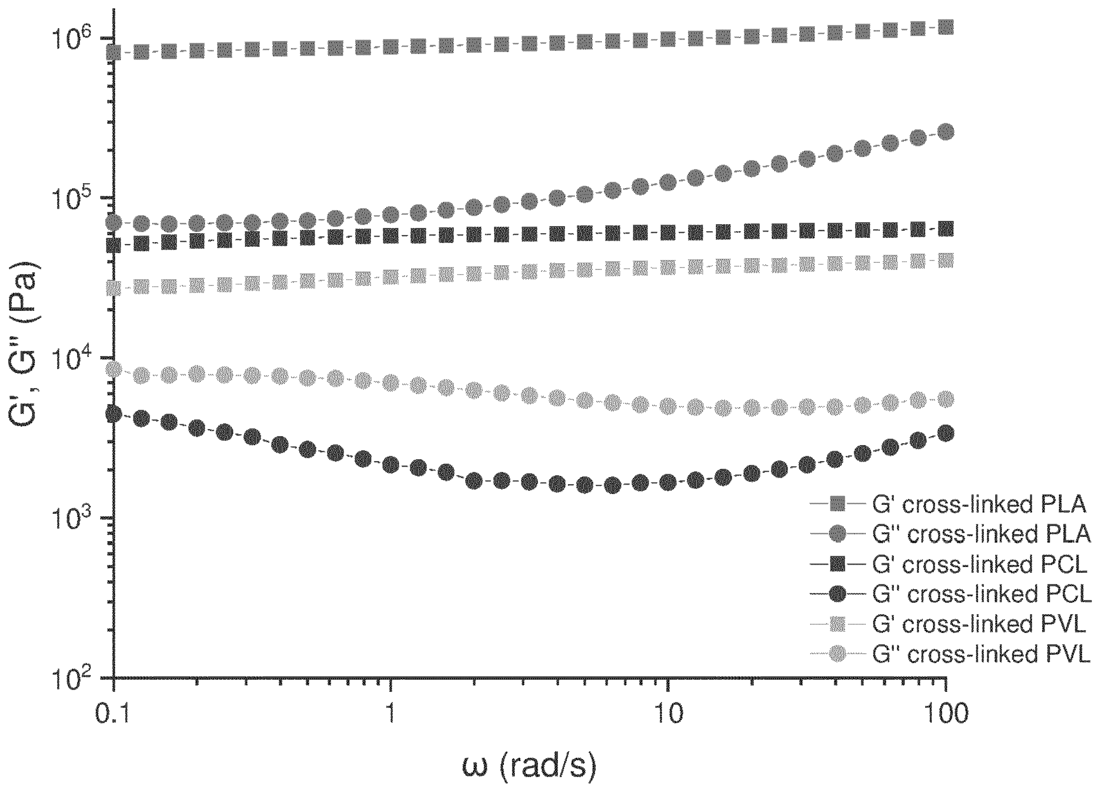

$10^6$
$10^5$
$10^4$
$10^3$
$10^2$
G', G'' (Pa)
0.1
1
10
100
ω (rad/s)
G' cross-linked PLA
G'' cross-linked PLA
G' cross-linked PCL
G'' cross-linked PCL
G' cross-linked PVL
G'' cross-linked PVL

*Figure 4*

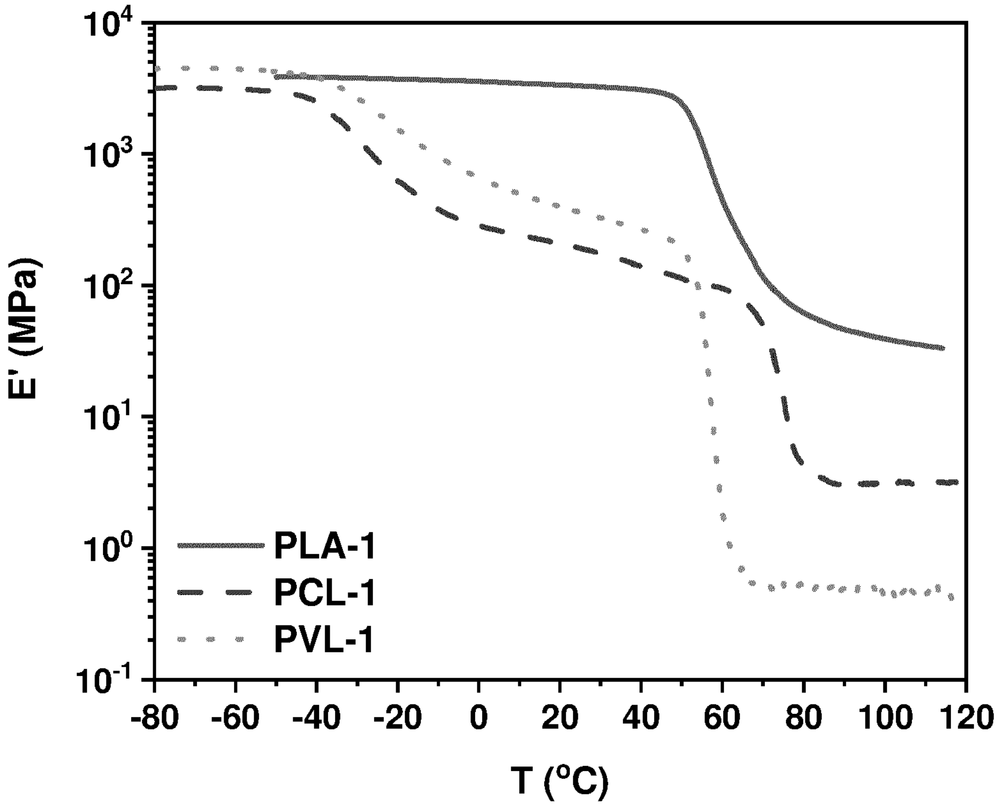

$10^4$
$10^3$
$10^2$
$10^1$
$10^0$
$10^{-1}$
E' (MPa)
-80
-60
-40
-20
0
20
40
60
80
100
120
T (°C)
PLA-1
PCL-1
PVL-1

*Figure 5A*

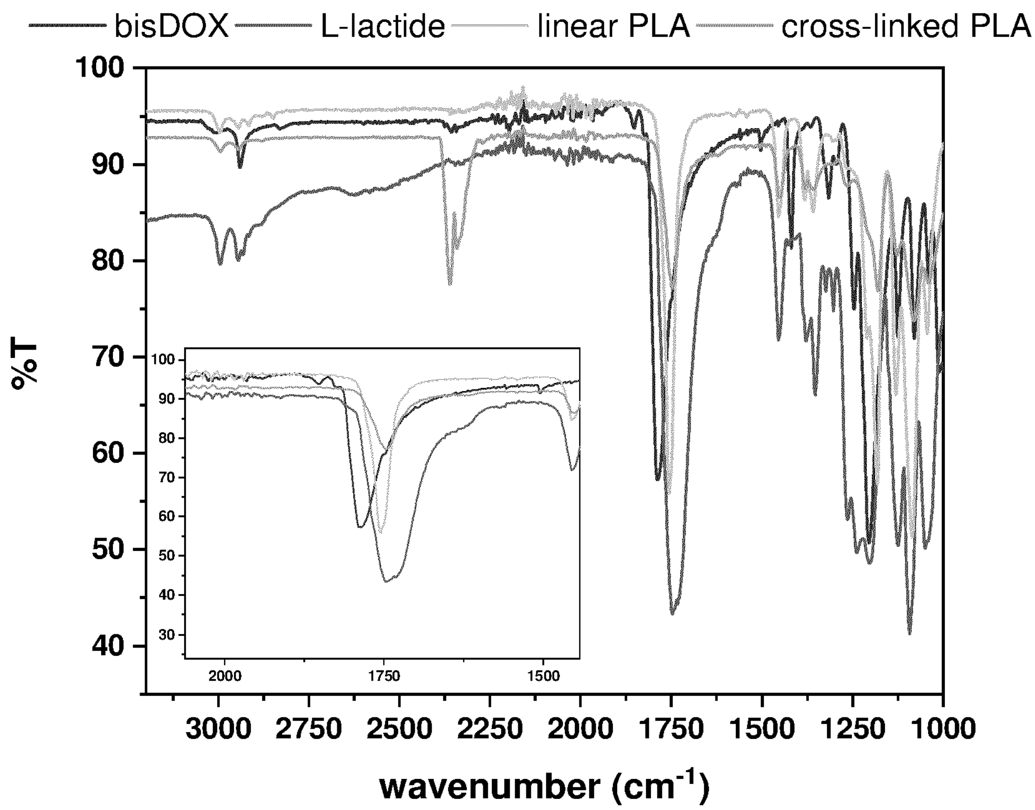


*Figure 5B*

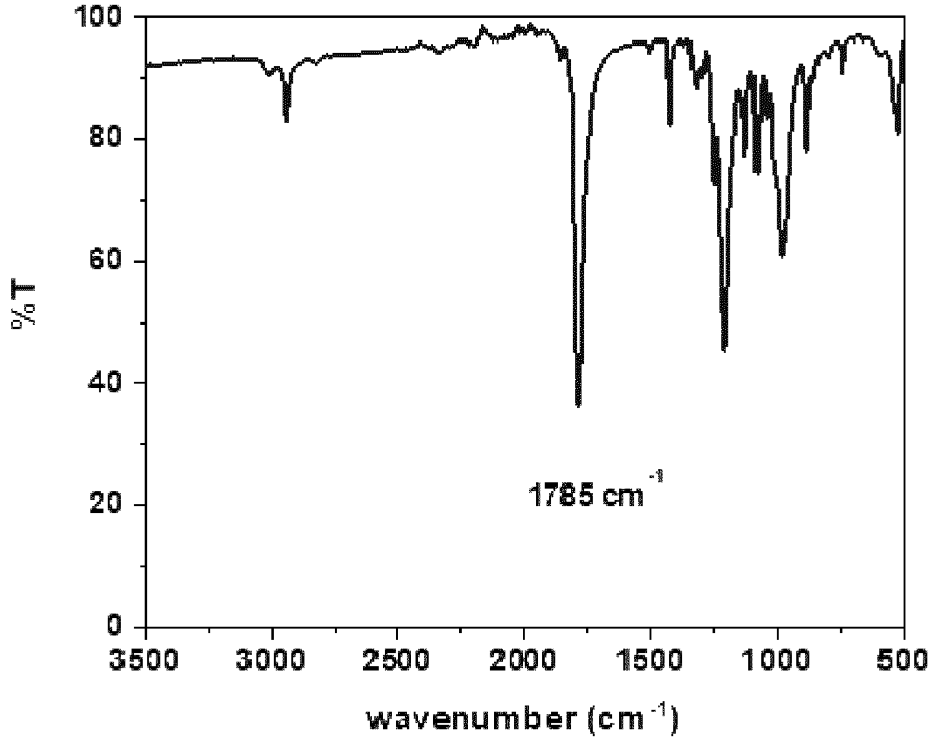

*Figure 5C*

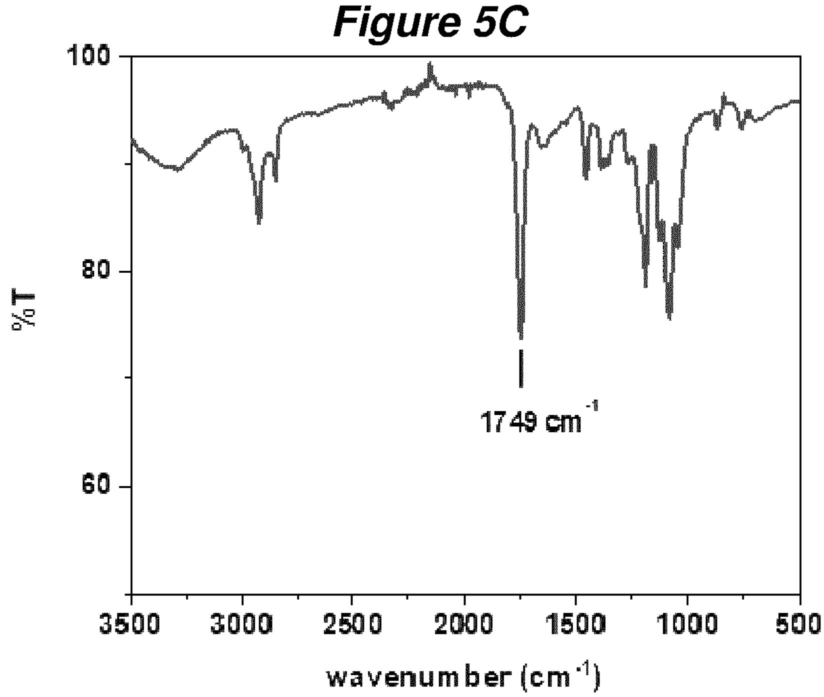


*Figure 6A*

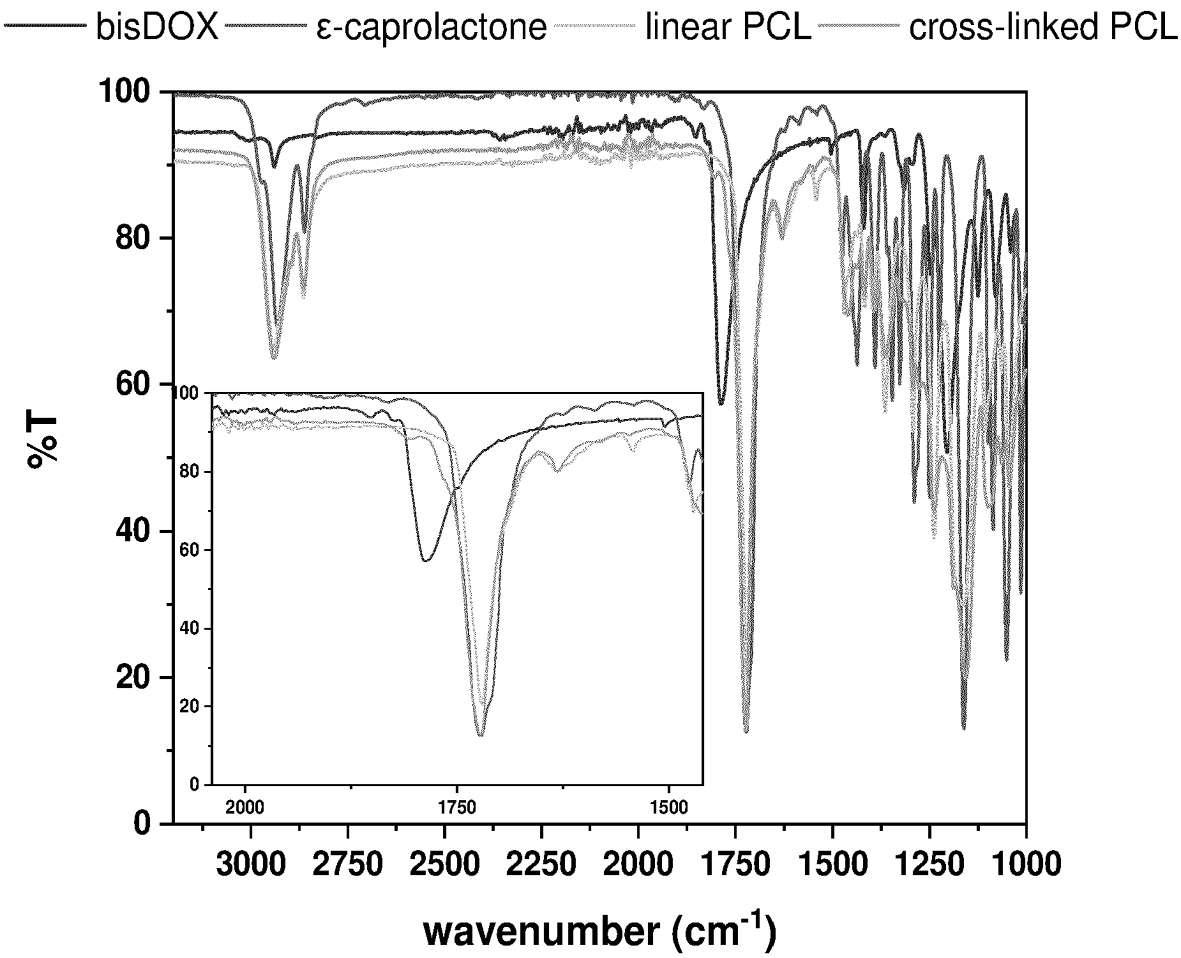

*Figure 6B*

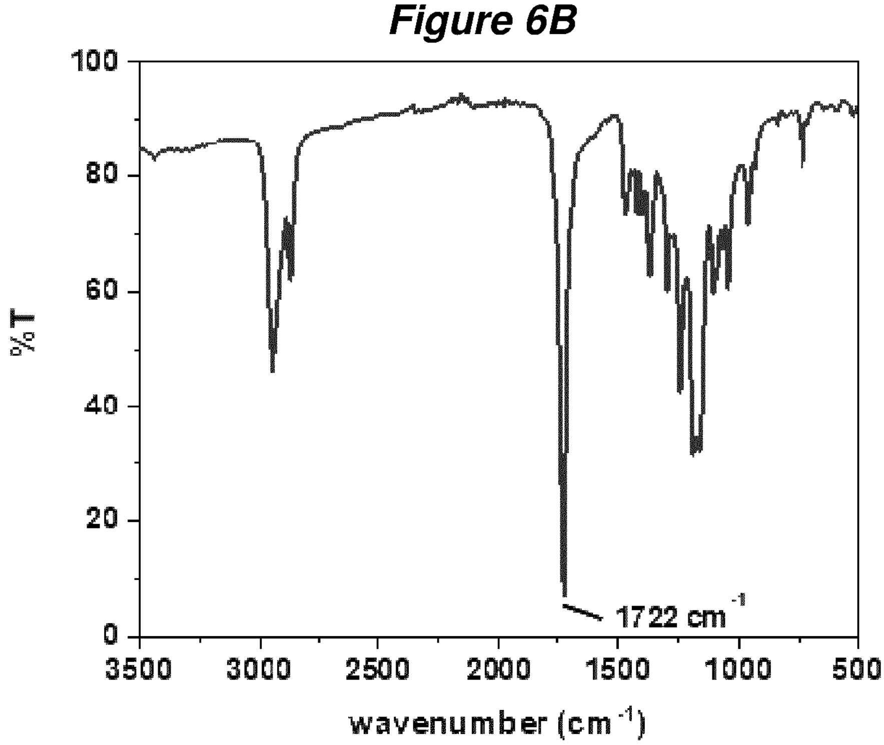


*Figure 7A*

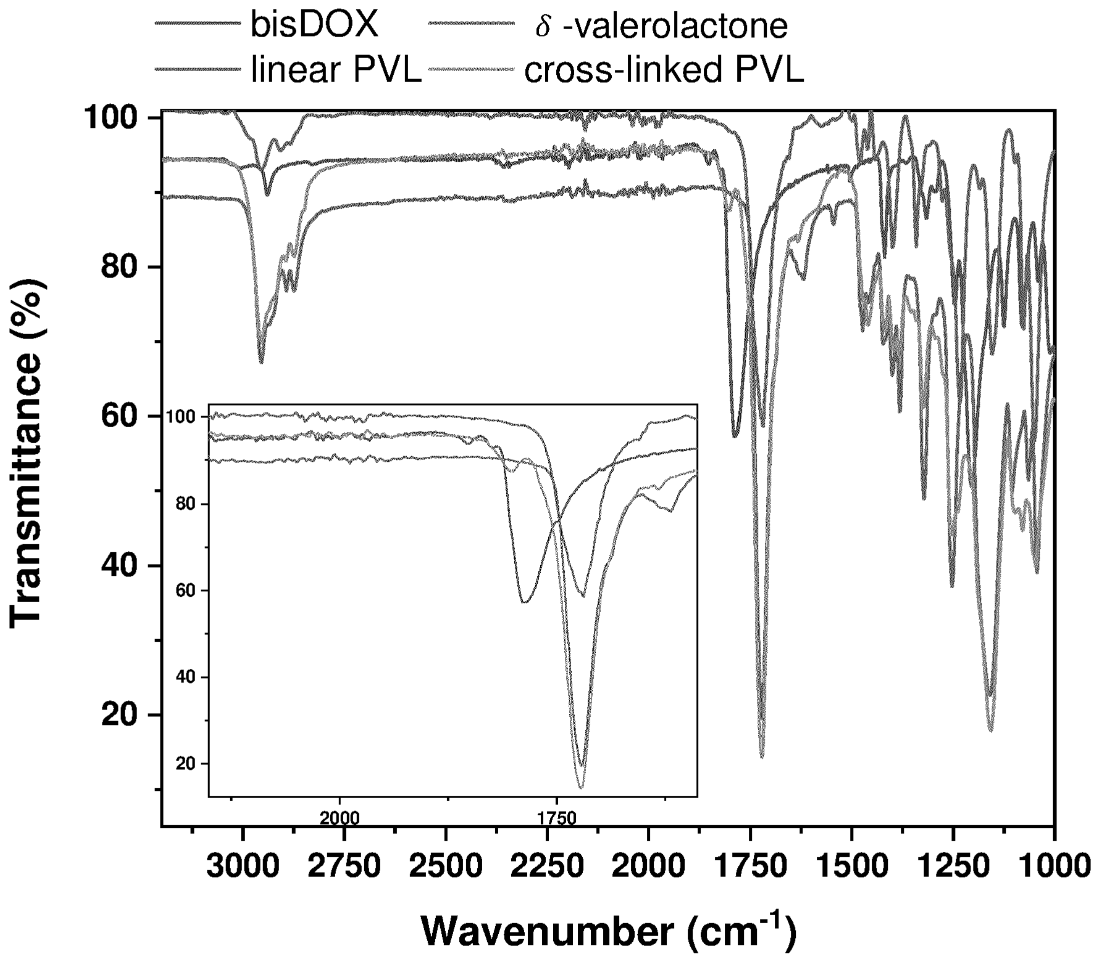

FIGURE 7B

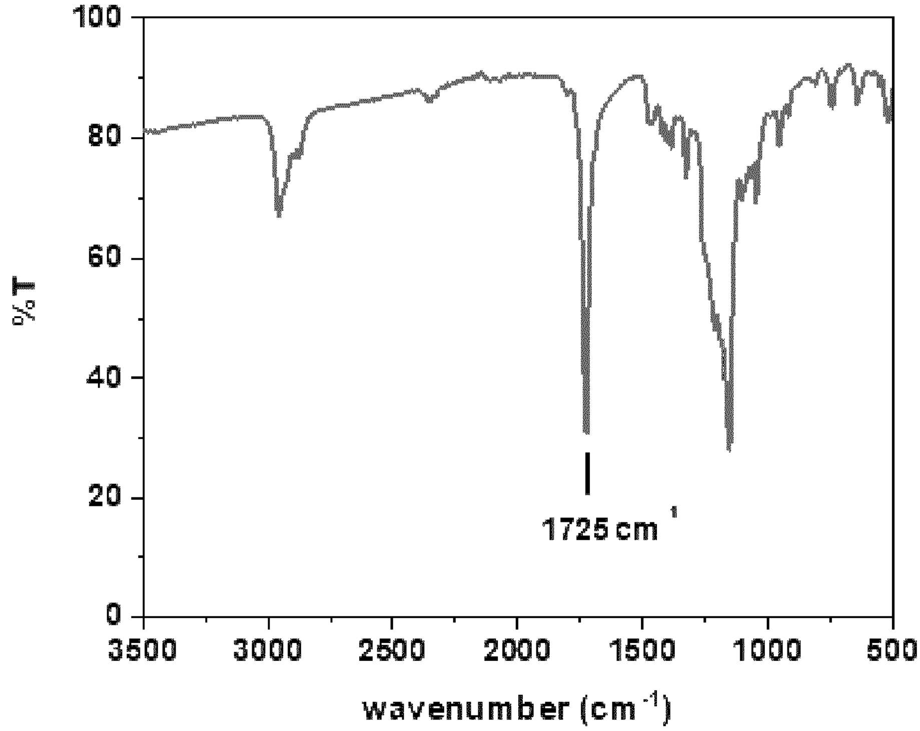


FIGURE 7C

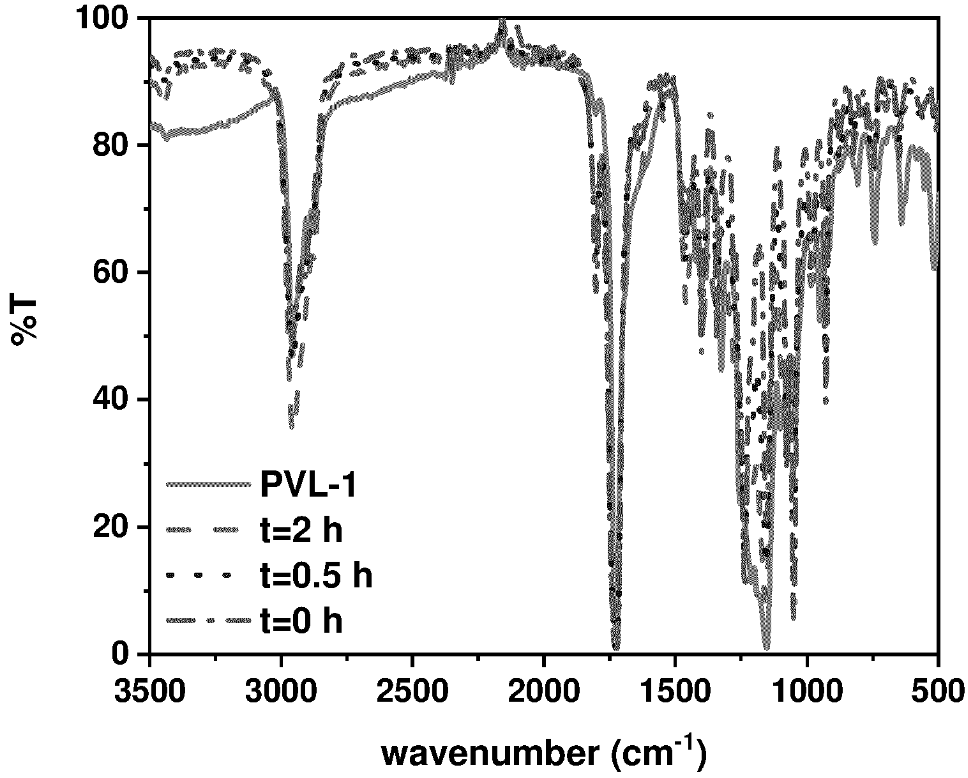

*Figure 7D*

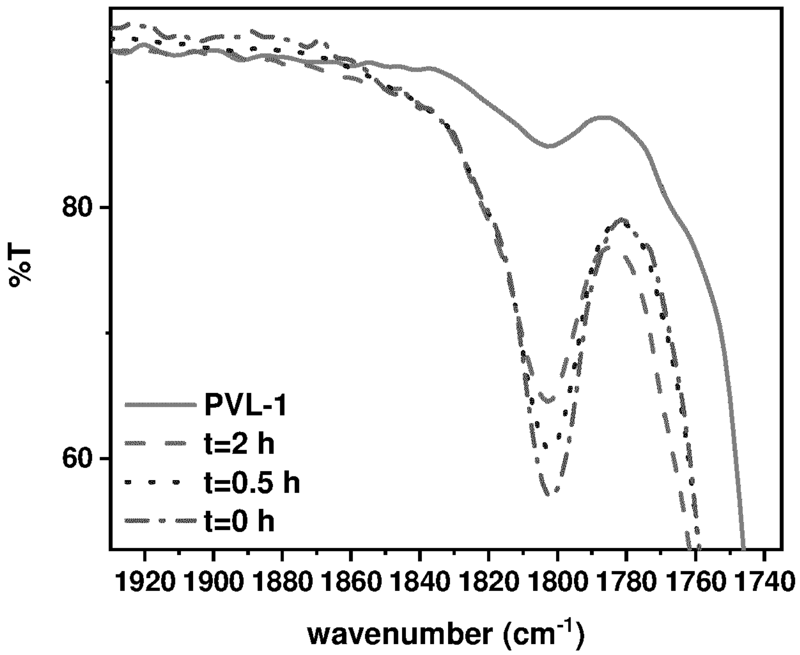


*Figure 8*

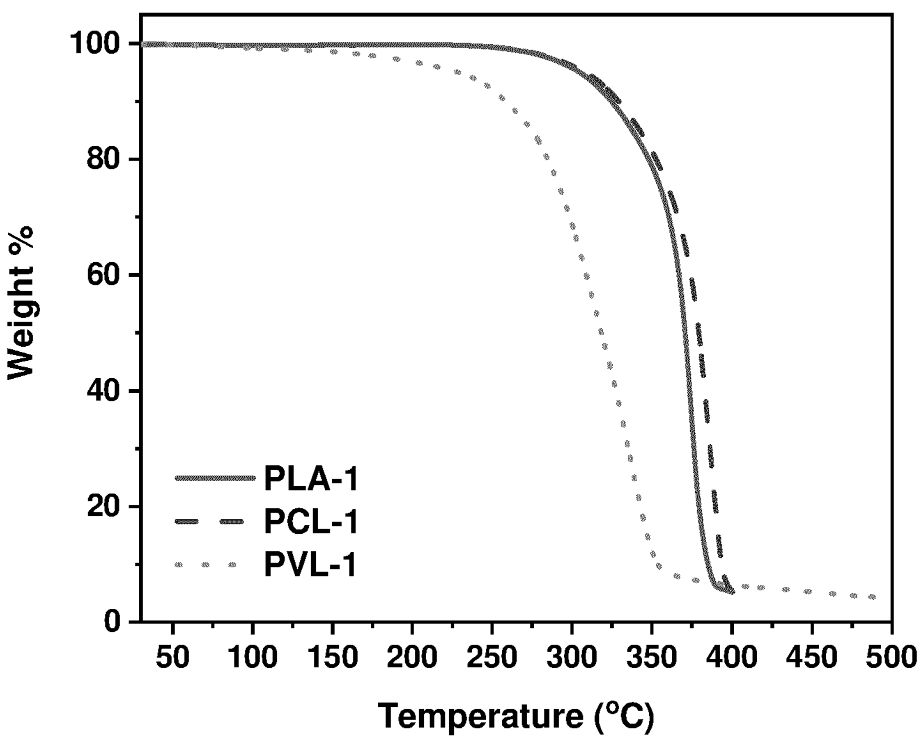

*Figure 9*

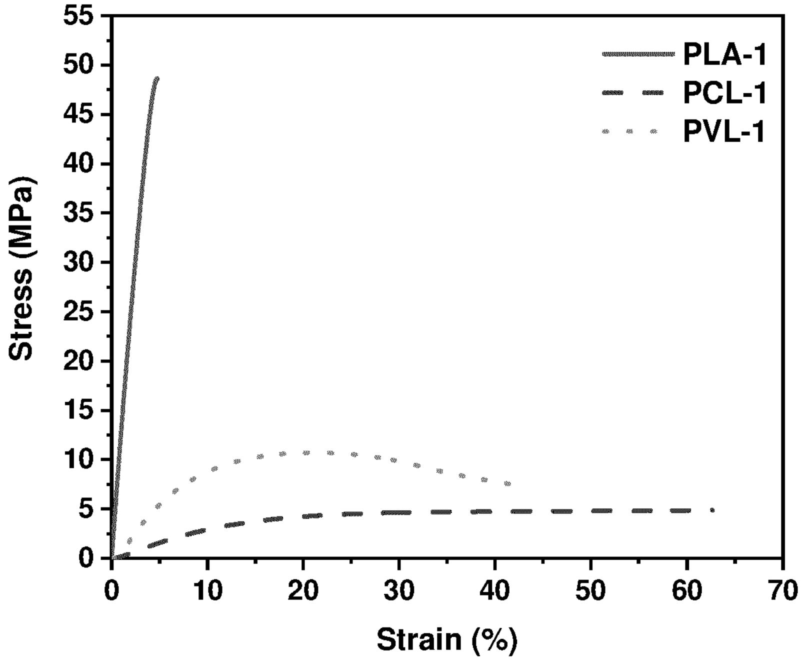
55
50
45
40
35
30
25
20
15
10
5
0
Stress (MPa)
0
10
20
30
40
50
60
70
Strain (%)
PLA-1
PCL-1
PVL-1

*Figure 10*

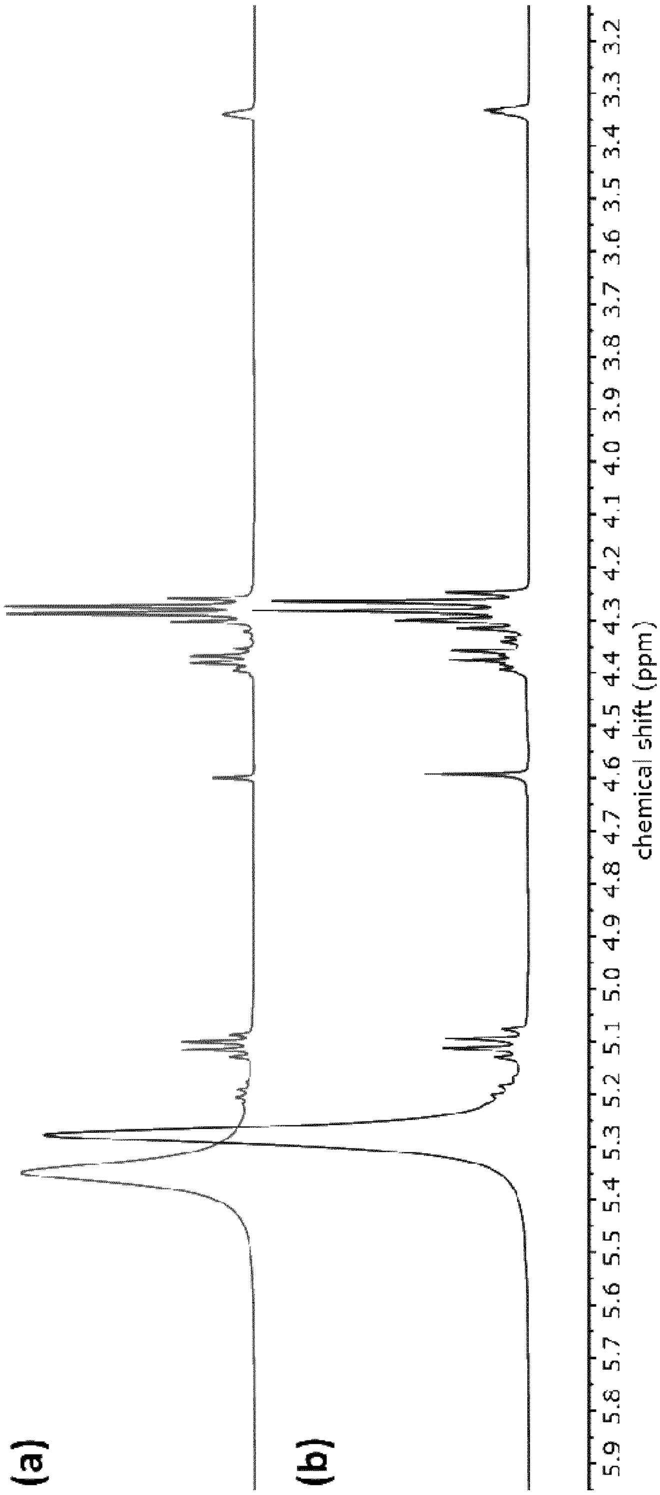
(a)
(b)
5.9 5.8 5.7 5.6 5.5 5.4 5.3 5.2 5.1 5.0 4.9 4.8 4.7 4.6 4.5 4.4 4.3 4.2 4.1 4.0 3.9 3.8 3.7 3.6 3.5 3.4 3.3 3.2
chemical shift (ppm)

*Figure 11*

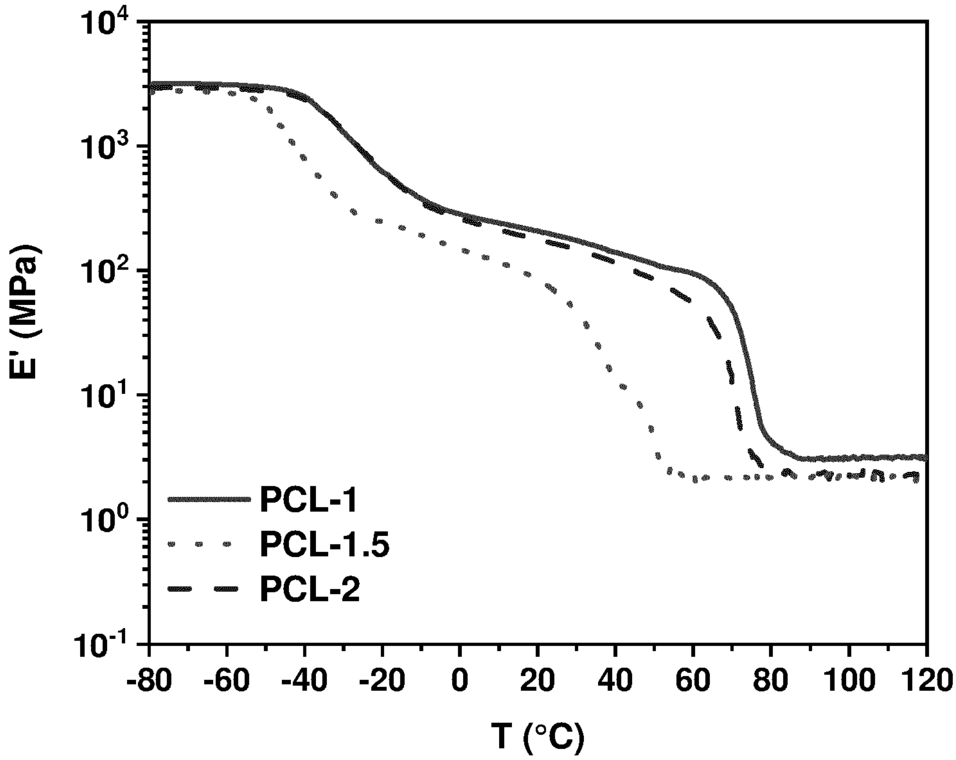


*Figure 12*

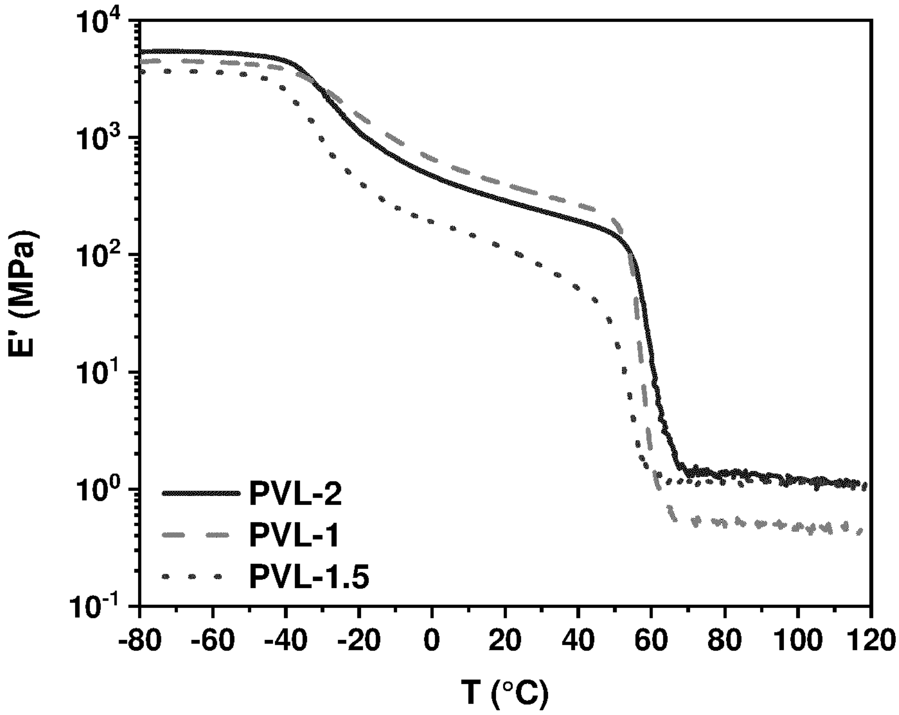

## *Figure 13*

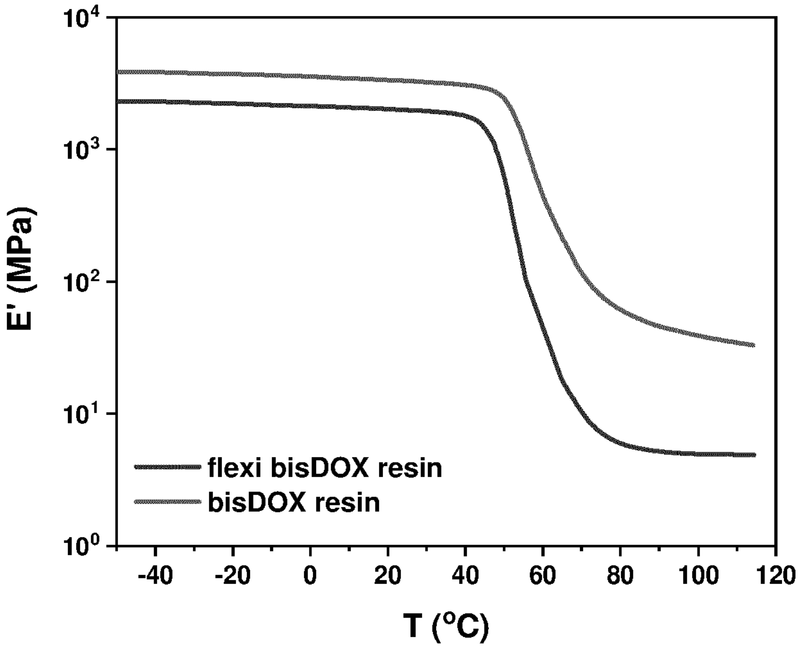


## *Figure 14*

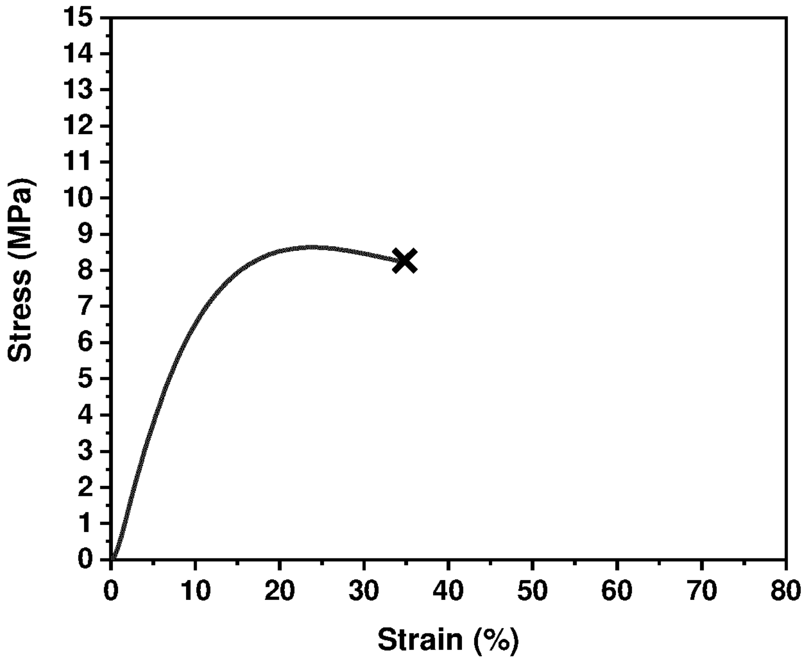

*Figure 15*

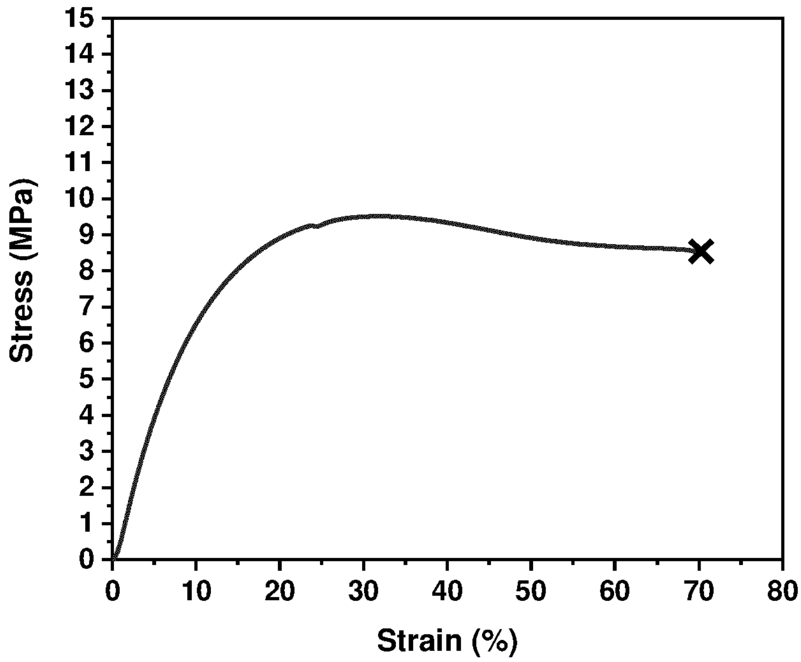
Stress (MPa)
15
14
13
12
11
10
9
8
7
6
5
4
3
2
1
0
0
10
20
30
40
50
60
70
80
Strain (%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6984393 B2


### Non-patent literature cited in the description


- **J. P. BRUTMAN** ; **G. X. DE HOE** ; **D. K. SCHNEIDERMAN** ; **T. N. LE** ; **M. A. HILLMYER**. Renewable, Degradable, and Chemically Recyclable Cross-Linked Elastomers. *Ind. Eng. Chem. Res*, 2016, vol. 55, 11097-11106
- **R. PALMGREN** ; **S. KARLSSON** ; **A. C. ALBERTSSON**. Synthesis of Degradable Cross-Linked Polymers Based on 1,5-Dioxepan-2-One and Cross-Linker of bis-Epsilon Caprolactone Type. *J. Polym. Sci., Part A: Polym. Chem.*, 1997, vol. 35, 1635-1649
- **H. M. YOUNES** ; **E. BRAVO-GRIMALDO** ; **B. G. AMSDEN**. Synthesis, characterization and in vitro degradation of a biodegradable elastomer. *Biomaterials*, 2004, vol. 25, 5261-5269
- **P. K. KUROISHI** ; **K. R. DELLE CHIAIE** ; **A. P. DOVE**. *Eur. Polym. J*, 2019
- Handbook of Ring-opening Polymerization. Wiley VCH, 2009